# EUROPEAN PATENT APPLICATION

(11) **EP 1 628 227 A1**
(43) Date of publication of application: **22.02.2006**
(21) Application number: 04733166.5
(22) Date of filing: 14.05.2004
(51) Int. Cl.: G06F 17/21, G06F 3/14

(54) **DATA PROCESSING DEVICE, DATA PROCESSING METHOD, DATA PROCESSING PROGRAM, AND COMPUTER-READABLE RECORDING MEDIUM CONTAINING THE DATA PROCESSING PROGRAM**

(30) Priority: 22.05.2003 JP 2003145310; 29.05.2003 JP 2003152096
(71) Applicant: SHARP KABUSHIKI KAISHA, Osaka-shi, Osaka 545-8522 (JP)
(72) Inventor: MITSUTOMI, Tomoo, Tenri-shi, Nara 632-0004 (JP); KADOWAKI, Motohiro, Tenri-shi, Nara 632-0004 (JP); KITAMURA, Yoshihiro, Osaka-shi, Osaka 545-0051 (JP); IWASAKI, Keisuke, Ikoma-gun, Nara 636-0154 (JP); SAWADA, Yuji, Nara-shi, Nara 630-8303 (JP)
(74) Representative: Brown, Kenneth Richard
(86) International application number: PCT/JP2004/006924
(87) International publication number: WO 2004/104857

(57) **Abstract**

Data (300) having a hierarchical structure described according to the XML definition is received, and the hierarchical structure is analyzed. According to the analysis result, the data is converted into data (400) having no hierarchical structure. The data (300) includes a plurality of tag pairs consisting of tags (302, 303, 305, 307, 310). The tag pairs each indicate the attribute value of indent or display color of a character string (304, 305, 309) bounded by the tag pair. When a portion bounded by a tag pair includes another tag pair indicating the attribute of the same type as the tag pair bounding the relevant portion, conversion processing is carried out to convert the attribute value of the other tag pair so as to reflect the attribute value of the tag pair bounding the relevant portion. As a result, the data (300) is converted into the data (400) having no hierarchical structure.

## Description

### Technical Field

The present invention relates to a processing device, a processing method, a processing program, and a computer readable recording medium having the processing program recorded therein, for data having a hierarchical structure described in accordance with definition of a document description language. Particularly, the present invention relates to a data processing device, a data processing method, a data processing program and a computer readable recording medium having the data processing program recorded therein, for facilitating handling of the data having a hierarchical structure.

### Background Art

SGML (Standard Generalized Mark-up Language), XML (extensible Markup Language), HTML (HyperText Markup Language) and others are known as data formats for recording a structured document having a hierarchical structure that is data structured to enable execution of prescribed processing in accordance with definition of a document description language. In recent years, particularly XML has often been used for electronic documents and electronic data exchanged over the Internet.

As a processing method for the XML data, the DOM (Document Object Model) method and the SAX (Simple API for XML) method are known. The details are described, e.g., in "Programming Technology Information Magazine, C MAGAZINE FEB. 2000, 2 'Feature 1: XML - Practical Use by C/C++' " (published by Softbank Publishing Co.), pp 14-15.

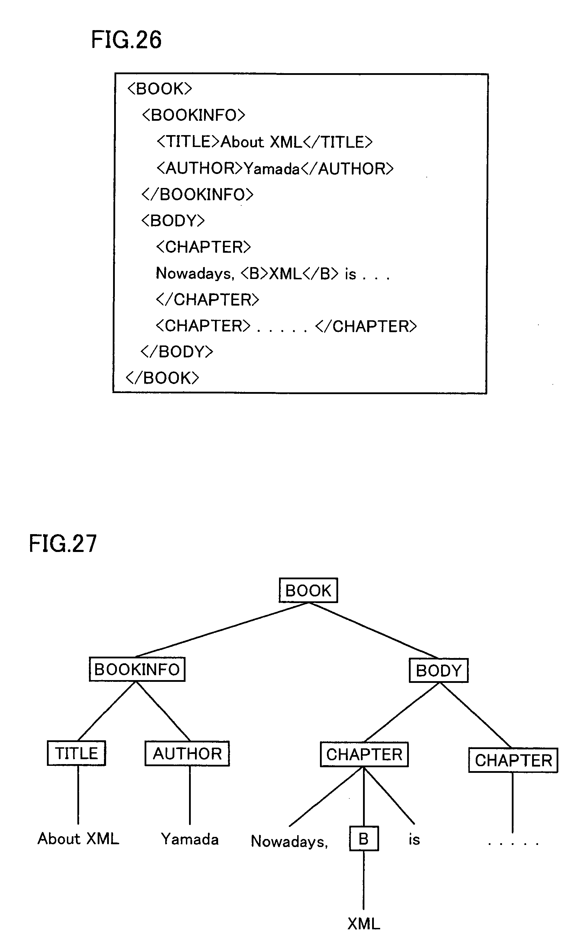

According to the DOM method, target electronic data is all read, and a hierarchical structure of all the elements within the electronic data having been read is analyzed before accessing each element of the electronic data. For example, in the case of electronic data having a hierarchical structure as shown in Fig. 26, the entire electronic data is once read, and then the hierarchical structure of all the elements is analyzed. Fig. 26 shows only the hierarchical structure of the electronic data, with the texts and contents not shown. A tree structure as shown in Fig. 27 is formed from the electronic data having the hierarchical structure shown in Fig. 26, and then each element (TITLE, AUTHOR, or the like) is accessed. Thus, in this method, processing is carried out only after the analysis of the hierarchical structure of the electronic data is done, which facilitates an access to a given element.

According to the SAX method, data is read sequentially from the beginning, and structural analysis is performed for only the elements having been read. This allows sequential processing, without the need of waiting for the analytical processing of the entire data to be finished, so that the overhead in terms of processing speed as well as memory capacity is small.

With the DOM method, however, even in the case where processing of only a part of data is desired, the structure of the entire data needs to be analyzed for forming the tree structure, causing waste of processing. Further, when the data increases in size, the processing time for forming the tree structure becomes long, and the memory capacity used for storing the tree structure increases.

This makes it difficult to process and display the data in a mobile device such as a portable phone, which is poor in processing capability.

Meanwhile; with the SAX method, since it is the access method assuming that the processing is carried out sequentially from the beginning of the electronic data, even in the case where elements are to be processed in a random order rather than sequentially from the beginning of the content of the electronic data, it is always necessary to read the data from the beginning and to perform structural analysis thereof. Further, even in the case where processing of elements on the latter half of the electronic data is desired, the electronic data should be read from the beginning, which causes waste of the processing time required for the structural analysis. This again makes it difficult to process and display the data in a device poor in processing capability.

The problem common to these methods is as follows. In a structured document, there exist tags requiring specification of effective ranges, and thus, it is necessary to analyze a hierarchical structure having a number of layers. This takes time for analytical processing. In a display device, the processing of analyzing the hierarchical structure becomes the load of the display processing, and as a result, there occurs a delay until display is achieved.

A conceivable way to allow high-speed processing of electronic data having a hierarchical structure will be to convert the electronic data into text data that records only the content to be displayed, with tag information removed therefrom, and tag data that records the tag information (information of, e.g., tag name, attribute name, attribute value, and an appearance location of the tag in the text data) necessary when processing the text data, and to process the data together to thereby reduce the processing time.

The tag information recorded in the tag data, however, varies in size as types as well as numbers of attributes differ depending on the types of the tags, so that it is necessary to secure an area of variable length for the tag data, or an area of fixed length that is sufficiently large in size. As such, although conversion of the electronic data into the text data and the tag data eliminates the need of processing for distinguishing the tag portion from the text portion, in order to enable high-speed processing of an element in a given position, the tag data needs to be read from the beginning for structural analysis, in which case the effects cannot be enjoyed sufficiently.

### Disclosure of the Invention

An object of the present invention is to provide a data processing device, a data processing method, a data processing program, and a computer readable recording medium having the data processing program recorded therein, for processing data having a hierarchical structure so as to enable easy handling thereof

To achieve the above-described object, a data processing device according to an aspect of the present invention includes: analysis means for receiving data having a hierarchical structure described in accordance with definition of a document description language and for analyzing the hierarchical structure; and conversion means for converting the data into data having the hierarchical structure resolved, based on an analysis result of the analysis means.

Accordingly, even if data has a hierarchical structure, the hierarchical structure is analyzed and resolved based on the analysis result, so that the data can be converted into data having no hierarchical structure.

At the time of outputting the data having a hierarchical structure for display or the like, if the data is converted into data having no hierarchical structure as described above prior to outputting thereof, output processing can be done without analysis of the hierarchical structure, which facilitates handling of data. This ensures high-speed data output processing. Further, since it is unnecessary to store an analyzed hierarchical structure for output, the memory capacity consumed for the data output can also be made small.

Preferably, the data having the hierarchical structure includes a plurality of tag pairs, and each tag pair designates information of an attribute of partial data bounded by the tag pair. When the partial data includes another tag pair designating an attribute of the same type as the tag pair bounding the partial data, the conversion means converts attribute information of the other tag pair using attribute information of the tag pair bounding the partial data.

Accordingly, when a plurality of tag pairs are arranged hierarchically, with partial data bounded by a tag pair including another tag pair of the same type of attribute, the data conversion means converts the attribute information of the other tag pair using the attribute information of the tag pair bounding the partial data. In this manner, in the case where there are tag pairs in different hierarchical levels, attribute information of a tag pair in an upper level can be reflected to attribute information of a tag pair in a lower level, to thereby resolve the hierarchical arrangement of the tag pairs. Accordingly, the data can be converted to data having no hierarchical structure.

Preferably, the conversion means performs the conversion such that information becoming unnecessary in the data after conversion is excluded. This can reduce the memory capacity spent for the data after conversion.

Preferably, the device further includes layout calculation means for calculating a layout for output of the data having the hierarchical structure resolved having been obtained by conversion by the conversion means.

Accordingly, the layout is calculated for the data where the hierarchical structure is resolved and no longer exists. This eliminates the need of analyzing a hierarchical structure for the layout calculation and hence the need of the recording area for storing the analysis result.

Preferably, the device further includes dividing means for dividing the data having the hierarchical structure described in accordance with definition of a document description language into a plurality of blocks. The analysis means receives and analyzes the data in units of the blocks obtained by dividing by the dividing means.

Accordingly, the data to be analyzed is divided into blocks in advance. The analysis means does not need to analyze the entire target data from the beginning; instead, it can analyze the data in units of arbitrary blocks. This reduces the load of the analysis processing. Further, the storage area for the analysis means only needs to have a size corresponding to the block unit. This decreases the capacity of the storage area spent.

The attribute information described above may include output manner information specifying the output manner of the partial data. The output manner information may include information of indent of the partial data, or information of color for output of the partial data.

The size of the data in each block described above may be determined based on processing capability of an output device prepared for outputting the data.

To achieve the above-described object, a data processing method according to another aspect of the present invention includes: the analysis step of analyzing a hierarchical structure of data having the hierarchical structure described in accordance with definition of a document description language and stored in a recording area prepared in advance; and the conversion step of converting the data stored in the recording area into data having the hierarchical structure resolved, based on an analysis result in the analysis step.

To achieve the above-described object, a data processing program according to yet another aspect of the present invention is a program for causing a computer to execute the above-described data processing method, and the above-described recording area is provided in association with the computer.

To achieve the above-described object, a computer readable recording medium according to yet another aspect of the present invention has the above-described data processing program recorded therein.

To achieve the above-described object, yet another aspect of the present invention provides a data processing device for processing electronic data including text data and a plurality of tags appearing in the text data and structured into hierarchies by using the plurality of tags.

The data processing device includes: input means for inputting text information having the text data recorded therein, tag detail information having recorded therein attribute data indicating an attribute of each tag for the plurality of tags, and tag appearance position information having recorded therein appearance position data indicating an appearance position of each tag in the text data for the plurality of tags; text reading means for reading from the text information input by the input means the text data corresponding to an arbitrary area of the electronic data that is to be processed; attribute reading means for specifying the tag appearing in the text data corresponding to the arbitrary area based on the tag appearance position information input by the input means and for reading the attribute data of the specified tag from the tag detail information input by the input means; and processing means for processing the text data read by the text reading means based on the attribute data read by the attribute reading means.

In the data processing device described above, electronic data is processed using its text information, tag appearance position information and tag detail information that are prepared separately. This can eliminate the need of processing for determining whether the data to be processed is a tag portion or a text portion, and accordingly, high-speed data processing becomes possible.

Further, since the tag appearance position information is prepared separately from the electronic data, it is unnecessary to individually analyze the tree structure (hierarchical structure) concerning the tags in the electronic data for the purpose of specifying the tag appearance position. As a result, processing for forming the tree structure, and hence, memory capacity for constructing the tree structure, can be omitted. Further, in the case of processing a tag appearing in an arbitrary position of the text data, the tag appearing in the arbitrary position can readily be specified by searching the tag appearance position data, and thus, the attribute data of the tag appearing in the arbitrary position can quickly be read from the tag detail information. As a result, the processing of the hierarchically structured electronic data can be simplified and increased in speed.

Preferably, the appearance position data recorded in the tag appearance position information is fixed length data. Accordingly, each piece of the appearance position data in the tag appearance position information can be searched based on the relevant fixed length, thereby enabling efficient search.

Preferably, the appearance position data includes effective range data indicating an effective range of the tag in the text data, and recording location data indicating a location in the tag detail information where the attribute data of the relevant tag is recorded. The attribute reading means specifies the tag corresponding to the arbitrary area based on the effective range data, and reads the attribute data of the tag from the tag detail information based on the recording location data of the specified tag.

Accordingly, it is readily possible to specify the tag appearing in the arbitrary area of the text data, based on the effective range data. Further, it is readily possible to specify and read the recording position of the attribute data of the specified tag in the tag detail information, based on its recording location data.

Preferably, the processing means has layout calculation means for calculating a layout of the text data read by the text reading means, based on the attribute data read by the attribute reading means.

Accordingly, the attribute data of the tag for the layout calculation can readily be specified and read from the tag detail information as described above, and then the layout calculation is carried out based on the read attribute data. This reduces the load of the layout calculation.

Preferably, the layout calculation means calculates the layout of the text data read by the text reading means for output thereof. One of the output manners is display.

Preferably, the effective range data indicates a start location and an end location of a portion of the text data where the attribute of the relevant tag becomes effective. Accordingly, it is possible to indicate the effective range data by the start and end locations of the data.

Preferably, the effective rang data indicates a start location of a portion of the text data where the attribute of the tag becomes effective, and a size of the relevant portion of the data. Accordingly, it is possible to indicate the effective range data by the start location and the size of the data.

Preferably, the recording location data indicates a recording start location and a recording end location of the attribute data of the tag in the tag detail information. Accordingly, it is possible to indicate the recording location data by using the recording start and end locations of the corresponding attribute data.

Preferably, the recording location data indicates a recording start location of the attribute data of the tag in the tag detail information, and a size of the relevant attribute data. Accordingly, it is possible to specify the recording location data by using the recording start location of the attribute data and the size of the relevant data.

Preferably, the device further includes at least one of: text information producing means for producing the text information by searching the electronic data and extracting and recording the text data; tag detail information producing means, every time the electronic data is searched and a tag is retrieved, for producing the tag detail information by recording the attribute data in association with the relevant tag; and tag appearance position information producing means, every time the electronic data is searched and a tag is retrieved, for producing the tag appearance position information by recording the appearance position data in association with the relevant tag.

Accordingly, in the data processing device, text information, tag detail information and tag appearance position information can be produced for the electronic data.

Preferably, the text information producing means produces the text information by searching the arbitrary area of the electronic data and extracting and recording the text data. The tag detail information producing means produces the tag detail information, every time the arbitrary area of the electronic data is searched and a tag is retrieved, by recording the attribute data in association with the relevant tag. The tag position information producing means produces the tag appearance position information, every time the arbitrary area of the electronic data is searched and a tag is retrieved, by recording the appearance position data in association with the relevant tag.

Accordingly, it is possible to produce the text information, the tag detail information and the tag appearance position information for a part of the electronic data in an arbitrary area, rather than for the entirety of the electronic data.

Preferably, the data processing device further includes means for determining whether the text information, the tag appearance position information and the tag detail information for the electronic data can be input via the input means.

Accordingly, determination as to whether the input of the data via the input means is possible or not can be made prior to the data processing. Further, it may be configured such that production of those data is carried out when the result of the determination indicates that the input is not possible.

To achieve the above-described object, a data processing method for processing electronic data including text data and a plurality of tags appearing in the text data and structured into hierarchies by using the tags according to yet another aspect of the present invention includes: the input step of inputting text information having the text data recorded therein, tag detail information having recorded therein attribute data indicating an attribute of each tag for the plurality of tags, and tag appearance position information having recorded therein appearance position data indicating an appearance position of each tag in the text data for the plurality of tags; the text reading step of reading from the text information input in the input step the text data corresponding to an arbitrary area of the electronic data that is to be processed; the attribute reading step of specifying the tag appearing in the text data corresponding to the arbitrary area by said information processing portion based on the tag appearance position information input in the input step, and reading said attribute data of the specified tag from the tag detail information input in the input step; and the processing step of processing the text data read in the text reading step based on the attribute data read in the attribute reading step.

Preferably, the above-described data processing method is executed in a computer. The input step is carried out via an input portion related to the computer, and the text reading step, the attribute reading step and the processing step are carried out via an information processing portion related to the computer.

To achieve the above-described object, a data processing program according to yet another aspect of the present invention is a program for causing a computer to execute the above-described data processing method.

To achieve the above-described object, a recording medium according to yet another aspect of the present invention is a computer readable recording medium having the above-described data processing program recorded therein.

### Brief Description of the Drawings

Figs. 1A and 1B schematically illustrate procedure of converting a structured document according to a first embodiment of the present invention.
Fig. 2 shows a block configuration example of a data processing device according to the first embodiment of the present invention, together with other devices constituting a data processing system including the data processing device.
Fig. 3 is a flowchart of data processing according to the first embodiment of the present invention.
Fig. 4 is a flowchart illustrating procedure of conversion processing of the conversion processing portion shown in Fig. 2.
Fig. 5 shows a layout when XML data in Fig. 1A is displayed after analysis of its hierarchical structure, and a layout when XML data in Fig. 1B is displayed.
Fig. 6 shows a configuration example of the display device in Fig. 2, together with other devices constituting the data processing system including the display device.
Fig. 7 is a flowchart of display processing by the display device of the first embodiment of the present invention.
Fig. 8 shows a block configuration example of a data processing device according to a second embodiment of the present invention, together with other devices constituting a data processing system including the data processing device.
Fig. 9 is a flowchart of data processing according to the second embodiment of the present invention.
Fig. 10 shows a portion where the XML data in Fig. 1A is divided into block units.
Fig. 11 shows that interpolation processing has been performed on the data shown in Fig. 10.
Fig. 12 shows the state of the data in Fig. 11 having undergone conversion processing.
Fig. 13 shows a configuration example of the display device in Fig. 8, together with other devices constituting the data processing system including the display device.
Fig. 14 is a flowchart of display processing of the display device according to the second embodiment of the present invention.
Fig. 15 is a block diagram of a data processing device according to a third embodiment of the present invention.
Fig. 16 shows a display device configured with portable equipment, which is an example of the data processing device of the third embodiment of the present invention.
Fig. 17 shows an example of data structure of tag appearance position data according to the third embodiment of the present invention.
Fig. 18 shows an example of data structure of tag detail data according to the third embodiment of the present invention.
Fig. 19 shows an example of XHTML document according to the third embodiment of the present invention.
Figs. 20A and 20B show examples of text data generated from the XHTML document in Fig. 19.
Fig. 21 shows an example of the tag appearance position data generated from the XHTML document in Fig. 19.
Fig. 22 shows an example of the tag detail data generated from the XHTML document in Fig. 19.
Fig. 23 is a flowchart of data processing according to the third embodiment of the present invention.
Fig. 24 is a flowchart of data processing according to the third embodiment of the present invention.
Fig. 25 is a configuration diagram of a computer for executing a data processing method according to each embodiment.
Fig. 26 shows an example of conventional electronic data having a hierarchical structure.
Fig. 27 illustrates a tree structure obtained from the conventional electronic data having the hierarchical structure.

### Best Modes for Carrying Out the Invention

Hereinafter, embodiments of the present invention will be described with reference to the drawings. Although it is assumed that data is output by display in the following description, not restricted thereto, it may be output by printout.

### (Description of Terms)

Firstly, the terms related to a tag used in a text file described in a markup language such as HTML, XML, SGML or the like will be described. Herein, the tag refers to a reserved word, which is a string of special characters or symbols for use in specifying an output manner (indent, display color or the like) of character string.

To analyze tag information described in a text file, it is necessary to identify a start tag, an end tag making a pair with the start tag, and a child element that is partial data sandwiched between the start tag and the end tag, and to identify a tag name, an attribute name and an attribute value included in the start tag. The pair of the start tag and the end tag is referred to as a tag pair.

The start tag is a character string part starting with '<' and ending with'>'. The end tag is a character string part starting with '</' and ending with '>'. If there is no child element between the start tag and the end tag, the start and end tags may be described as one character string starting with '<' and ending with '/>'. This is called an empty tag. It is possible to consider that the empty tag is equivalent to the start tag and the end tag arranged side by side.

If not such an empty tag, the child element includes a character string constituting a text file or another tag pair. If a child element includes more than one tag pair specifying an attribute of the same type as that of the start tag of the tag pair sandwiching the child element, the tag pair sandwiching the child element (which is called an external tag pair) and the tag pair included in the child element (which is called an internal tag pair) have the nesting relationship where a plurality of tag pairs have a hierarchical structure. In this case, the attribute value of the external tag pair in the upper hierarchical level is reflected to the attribute value of the start tag in the internal tag pair.

The tag name is indicated by the character string following '<' in the start tag or the empty tag. When a character string including '=' follows the tag name, the left side of '=' represents an attribute name, and a character string bounded by ' " ' in the right side represents an attribute value. In the case of XML data of'<a b="c"> d </a>', for example, '<a b="c">' is the start tag, 'd' is the child element, and '</a>' is the end tag. Of the start tag, 'a' is the tag name, 'b' is the attribute name, and 'c' is the attribute value. In the first and second embodiments, the attribute name (type of the attribute) and the tag name have the 1:1 correspondence for simplification of explanation, and therefore, the type of the attribute is specified by the tag name. The attribute name indicates an attribute, which is a specific characteristic such as indent, display color or the like, upon output of the child element of the start tag. The attribute value indicates a value of the corresponding attribute, such as the number of spaces for the indent, red for the display color, or the like. The empty tag in the case where the child element is empty takes the form of'<a b="c"/>'. In the following description, when the tag name is 'a', it is called the 'a tag'. When the attribute name is 'b', it is called the 'b attribute', and the corresponding attribute value is called the 'value of the b attribute'.

### (Schematic Procedure of Conversion of Structured Document)

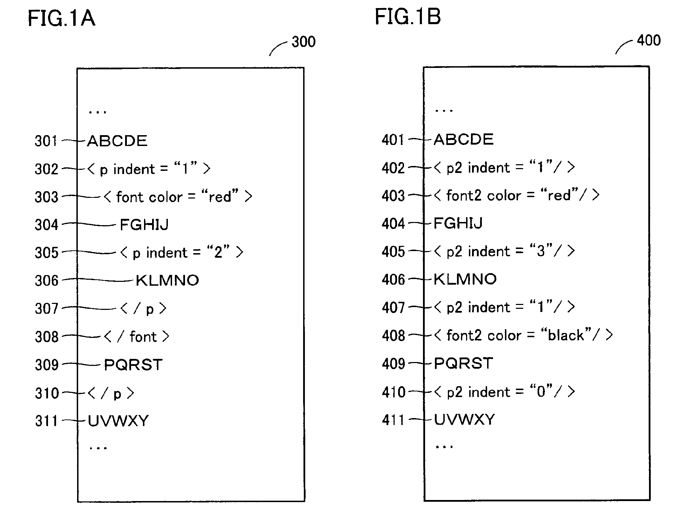

Conversion procedure of a structured document according to an embodiment of the present invention will be described schematically with reference to Figs. 1A and 1B. Fig. 1A shows XML data 300 having a hierarchical structure before conversion, and Fig. 1B shows XML data 400 corresponding to XML data 300 after conversion. In XML data 400, the original hierarchical structure has been resolved and no longer exists. XML data 400 is obtained by converting XML data 300 sequentially in rows from the top.

In XML data 300 in Fig. 1A, the character string 301 'ABCDE' does not constitute a child element of a tag. Thus, default values '<p indent="0">' and '<font color="black">' are set. These default values designate no indent and display in black for character string 301. Since no conversion is necessary for character string 301, it becomes a character string 401 'ABCDE' in XML data 400 in Fig. 1B. Hereinafter, conversion of character strings, which is not done, will not be explained specifically.

The character string 304 "FGHIJ" corresponding to the character string 404 is a child element of the tag 302 '<p indent="1">' and the tag 303 '<font color="red">'. Thus, it is displayed with indent of one space and in red. Since there are no tags having the same tag name in the upper hierarchical level than character string 304, there is no influence on the attribute values of the tags to be converted. Thus, tags 302 and 303 are converted to the tag 402 '<p2 indent="1"/>' and the tag 403 '<font2 color="red"/>', respectively, in XML data 400. Once the start tag is described, the tag information (attribute value) is effective within the range until the end tag having the same tag name is described. This range is called the effective range. The 'p2' tag and the 'font2' tag are empty tags, with no designation of effective ranges.

The character string 306 'KLMNO' is a child element of tag 302 '<p indent="1">', tag 303 '<font color="red">', and the tag 305 '<p indent="2">'. Thus, it is displayed with indent of three spaces and in red. Since tag 302 is in the upper hierarchical level than tag 305, the information of tag 302 is reflected upon conversion of tag 305. That is, tag 305 is converted to the tag 405 '<p2 indent="3"/>' in XML data 400.

Character string 406 'KLMNO' is displayed with indent of three spaces and in red, based on the information of tag 403 '<font2 color="red"/>' and tag 405 '<p2 Iinent="3">'. This becomes the same display as the one before conversion based on XML data 300.

The character string 309 'PQRST' is a child element of tag 302 '<p indent=" 1">', and thus, displayed with indent of one space and in black that is the default value. The tag information of tag 305 '<p indent="2">' is ended with the end tag of tag 307 '</p>'. Thus, the information of tag 302 '<p indent="1">' belonging to the upper hierarchical level and having the same tag name is reflected to tag 307'</p>'. That is, tag 307 is converted to the tag 407 '<p2 indent="1"/>' in XML data 400.

Similarly, the tag information of tag 303 '<font color="red">' is ended with the end tag of tag 308 '</font>'. Since there is no tag having the same tag name in the upper hierarchical level of tag 308 '</font">', the information of the default value '<font color="black">' is reflected. That is, tag 308 is converted to the tag 408 '<font2 color="black"/>' in XML data 400.

The character string 409 'PQRST' is displayed with indent of one space and in black by the information of tag 407 '<p2 indent="1"/>' and tag 408 '<font2 color="black"/>', which is the same display as in before conversion.

The character string 311 'UVWXY' does not have any tag information. Thus, the default values become effective and it is displayed with no indent and in black. The tag information of tag 302 '<p indent="1">' is ended with the end tag of tag 310 '</p>'. Since there is no tag having the same tag name in the upper hierarchical level than tag 310 '</p>', the information of the default value '<p indent="0">' is reflected. That is, tag 310 is converted to the tag 410 '<p2 indent="0"/>' in XML data 400.

The character string 411 'UVWXY' is displayed with no indent and in black based on the information of tag 408 '<font2 color"black"/>' and tag 410 '<p2 indent="0"/>', which is the same as the display before conversion.

Accordingly, XML data 300 having a hierarchical structure shown in Fig. 1A is converted to XML data 400 no longer having the hierarchical structure shown in Fig. 1B, without any modification of the information to be displayed (character strings and others) or the display manner (indent, display color and others).

### (First Embodiment)

(Description of Data Processing System Including Data Processing Device)

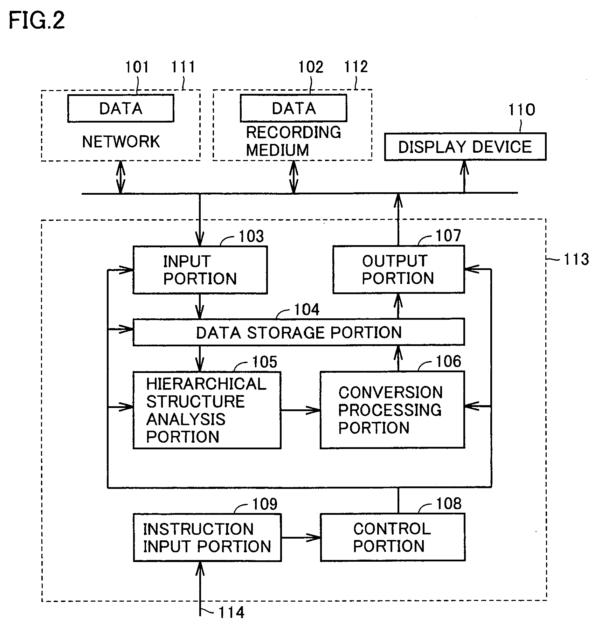

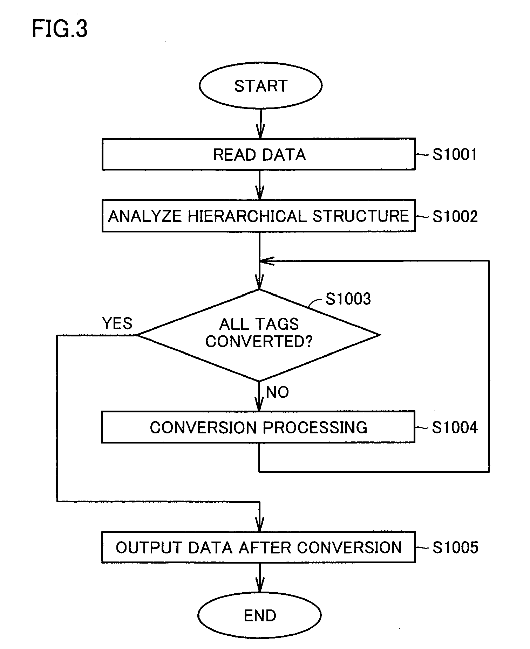

Fig. 2 shows a block configuration example of a data processing device according to the present embodiment, together with other devices constituting a data processing system including the data processing device. Fig. 3 is a flowchart of data processing according to the present embodiment.

Referring to Fig. 2, the data processing system is configured with a network 111, a recording medium 112, a data processing device 113, and a display device 110.

Network 111 is connected to data processing device 113, and to a server or another personal computer having a database with data recorded therein. Data 101 is provided via network 111 to data processing device 113. Recording medium 112 has data 102 prerecorded thereon, and is used for providing data 102 to data processing device 113. Examples of recording medium 112 may include a flexible disc (FD), a CD-ROM (compact disc read only memory), and a hard disc. Data processing device 113 receives and processes data 101 and 102 provided from network 111 and recording medium 112, and externally outputs the data of processing results. Display device 110 receives and displays the information output from data processing device 113. Display device 110 will be described later in detail. The information output from data processing device 113 may be transmitted to an external device via network 111, or may be recorded on recording medium 112.

Data 101 and 102 are data structured in accordance with definition of a document description language to cause prescribed processing to be carried out. They are recorded using SGML, XML or the like that is the data structure for recording a structured document having a hierarchical structure. In the following description, it is assumed that the data is described according to XML and has a data structure enabling specification of the data elements, although the manner of describing the data is not restricted to XML.

### (Description of Data Processing Device 113)

The data processing device 113 shown in Fig. 2 includes an input portion 103, a data storage portion 104, a hierarchical structure analysis portion 105, a conversion processing portion 106, an output portion 107, a control portion 108, and an instruction input portion 109. The data processing procedure using these portions will now be described schematically according to the flowchart of Fig. 3.

Input portion 103 reads data 101 or 102 (step S (hereinafter, simply referred to as S) 1001). Data storage portion 104 stores data 101 or 102 read by input portion 103. Hierarchical structure analysis portion 105 analyzes the tag information and the hierarchical structure of data 101 or 102 stored in data storage portion 104.

Hierarchical structure analysis portion 105 acquires information of a start tag, an end tag, a child element, as well as a tag name, an attribute name and an attribute value of the start tag, for all the XML data in data 101 or 102, and analyzes the hierarchical structure of the tags based on the acquired information, to thereby acquire information of the hierarchical structure (S 1002). At this time, the tag information obtained by analyzing the XML data sequentially in units of rows from the top is stored sequentially in a prescribed storage area prepared in advance.

Conversion processing portion 106 carries out conversion processing for the tags having the hierarchical structure in the XML data, based on the information obtained through analysis by hierarchical structure analysis portion 105 and stored in the prescribed storage area (S1004). Conversion processing portion 106 determines whether the conversion processing has been carried out for all the tags having the hierarchical structure, and if so, it terminates the conversion processing (S1003). Conversion processing portion 106 will be described later in detail.

The XML data having undergone conversion processing by conversion processing portion 106 and output is stored again in data storage portion 104. Output portion 107 inputs the converted data read from data storage portion 104 and externally outputs the same (S1005).

Control portion 108 controls the above-described series of processing of input portion 103, data storage portion 104, hierarchical structure analysis portion 105, conversion processing portion 106, and output portion 107, based on given instructions and others. Instruction input portion 109 inputs an instruction 114 eternally supplied for manipulating data processing device 113, for example a user instruction 114, and outputs the same to control portion 108.

### (Specific Conversion Processing)

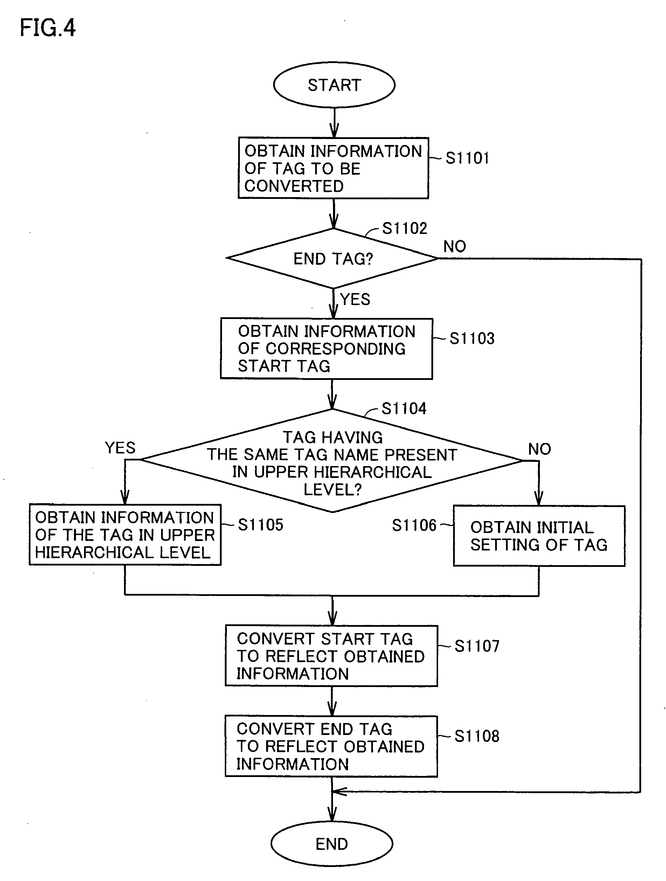

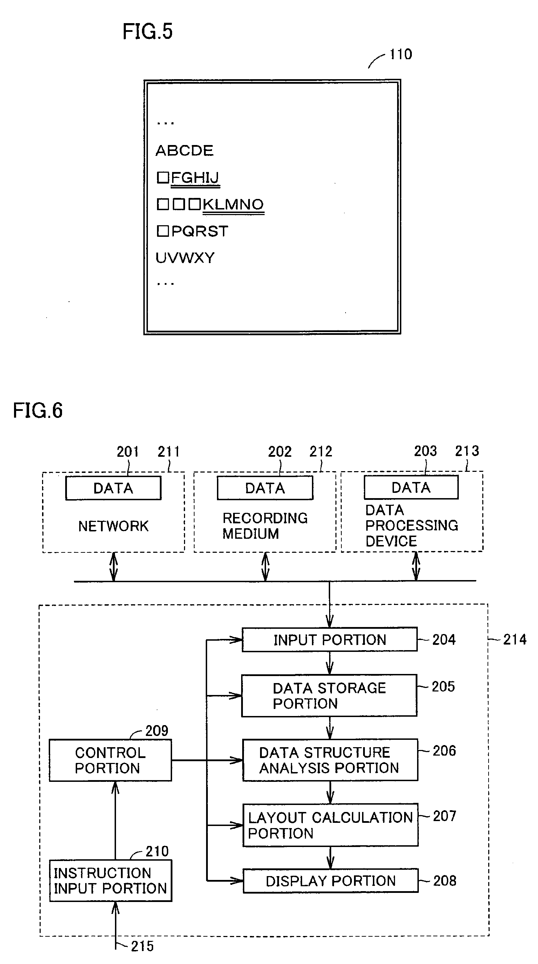

Hereinafter, procedure of the conversion processing (S1004) by conversion processing portion 106 based on the information of the hierarchical structure of XML data will be described. Fig. 4 is a flowchart illustrating the conversion processing procedure of conversion processing portion 106. Herein, it is assumed that the XML data to be subjected to the conversion processing that is input to data processing device 113 is XML data 300 shown in Fig. 1A, and the XML data having undergone the conversion processing that is to be output from data processing device 113 is XML data 400 shown in Fig. 1B. Further, Fig. 5 shows a layout when XML data 300 of Fig. 1A is subjected to analysis of the hierarchical structure and then displayed, and a layout when XML data 400 of Fig. 1B is displayed on display device 110.

### (Description of Tags)

Firstly, the tags described in Fig. 1A will be described. The 'p' tag is a tag related to display of paragraph, and the 'indent' attribute means that a sentence is started with indent by the number of spaces corresponding to the 'indent' attribute value (i.e., following the blank for the number of spaces) from the current start position of the sentence. For example, tag 305 '<p indent="2">' means that the sentence is to be started with indent of two spaces from the current sentence start position. The 'font' tag is a tag related to display of character, and the 'color' attribute means that the character is displayed with the color changed from the default (black). For example, tag 303 '<font color="red">' means that the character is to be displayed by changing its color to red. Herein, it is assumed, for the default to be used when there is no specific designation, '<p indent="0">' has been set for the sentence start position to designate the leftmost position, and '<font color="black">' has been set for the color of character to designate black.

### (Description of Layout)

When XML data 300 of Fig. 1A is analyzed and displayed, the layout shown in Fig. 5 is obtained. In Fig. 5, '□' shows one space for indent of the sentence start portion, which is designated by the 'indent' attribute of the 'p' tag. The double underline indicates that the color of the characters is red according to the 'color' attribute of the 'font' tag.

In the conversion processing, firstly, the tag information stored in the above-described prescribed storage area is searched and the information of the tag to be converted is obtained (S1101). In Fig. 1A, tag 302 '<p indent=" 1 ">' is obtained firstly.

Next, it is determined whether the obtained tag is a start tag, an end tag, or an empty tag (S 1102). If it is determined that the obtained tag is not the end tag but the start tag or the empty tag, conversion is unnecessary, so that the conversion processing is terminated. In Fig. 1A, tag 302 is a start tag, so that the conversion processing is terminated.

Next, the prescribed storage area is searched and tag 303 '<font color="red">' and tag 305 '<p indent="2">' are obtained sequentially. Since they are determined to be the start tags, the conversion processing is terminated. Tag 307 '</p>' read and obtained from the prescribed storage area next is determined to be the end tag. Thus, the conversion processing is continued.

When the obtained tag is the end tag, the information of the start tag corresponding to the relevant end tag is searched for and obtained from the prescribed storage area (S1103). In Fig. 1A, for the start tag corresponding to the end tag of tag 307, tag 305 is retrieved.

Next, it is determined whether there is a tag having the same tag name in the upper hierarchical level than the start tag corresponding to the end tag (S1104). Herein, the upper hierarchical level refers to the hierarchical level of the tag that includes the start tag to be conversion processed as its child element, in accordance with the nesting relationship described above.

### (When "YES" in S1104 in Fig. 4)

The case where a tag having the same tag name exists in the upper hierarchical level will now be explained. As a result of the search, if there exists a tag having the same tag name in the upper hierarchical level, the information of the tag in the upper hierarchical level is obtained (S1105). The tag information to be obtained is the attribute information of the start tag in the upper hierarchical level. In Fig. 1A, tag 302 and tag 310 '</p>' exist in the upper hierarchical level of the hierarchical level of tag 305 and tag 307. As a result of the search, tag 302 that is the start tag in the upper hierarchical level is obtained, and the attribute information thereof is obtained. Then, the start tag having been obtained in S1103 is converted to reflect the obtained information (S1107).

Herein, the conversion involves the processing to obtain sum or difference of the attribute values when the obtained information and the start tag have the same attribute, and it involves the processing to add or delete the attribute(s) when the obtained information and the start tag do not have the same attribute. It also involves the conversion of the tag names and the tag types, i.e., start tag, end tag, empty tag and the like, as appropriate.

In Fig. 1A, the 'indent' attribute of tag 302 is reflected to the 'indent' attribute of tag 305. The 'indent' attribute of the 'p' tag means that a sentence (character string) is to be started with indent from the current position by the number of spaces corresponding to the 'indent' attribute value. Thus, in this case, addition is carried out. Specifically, the 'indent' attribute value '1' of tag 302 and the 'indent' attribute value '2' of tag 305 are added to obtain the 'indent' attribute value of '3'. Further, the tag name is converted from "p' tag to 'p2' tag, and the tag is converted from the start tag to the empty tag. As a result, tag 305 is converted to tag 405 '<p2 indent="3"/>' in Fig. 1B. The 'p2' tag, similarly to the 'p' tag, means that the sentence (character string) is to be started with indent by the number of spaces indicated by the 'indent' attribute value. The 'p2' tag differs from the 'p' tag in that, while the 'p' tag designates the effective range by using the start tag and the end tag, the 'p2' tag is described with an empty tag and is effective until there is a change in attribute by a 'p2' tag subsequently.

After the conversion processing of the start tag, the end tag corresponding to the relevant start tag is retrieved from the prescribed storage area, and is converted such that the obtained information is reflected to the end tag as well (S1108). Since the end tag does not have an attribute, herein, the attribute of the obtained information is added to the end tag as its attribute. Further, the tag name and the tag type, i.e., start tag, end tag or empty tag, are converted as appropriate.

In Fig. 1A, the 'indent' attribute value '1' is added to tag 307. Further, the tag name is converted from the 'p' tag to the 'p2' tag, and the tag is converted from the end tag to the empty tag. As a result, end tag 307 in Fig. 1A is converted to tag 407 '<p2 indent="1"/>' in Fig. 1B. The conversion processing is finished after completion of conversion of the start and end tags.

### (When "NO" in S1104 in Fig. 4)

The case where there is no tag having the same tag name in the upper hierarchical level will now be explained. If a tag having the same tag name is not in the upper hierarchical level, the information of the initial setting (default) for the tag having the relevant tag name is obtained (S1106).

In Fig. 1A, there is no 'font' tag in the upper hierarchical level than the hierarchical level to which tag 308 '</font>' and its corresponding start tag 303 '<font color="red">' belong. Thus, the initial setting of the 'font' tag, i.e., '<font color="black">', is obtained.

The processing of converting the start tag and the end tag to reflect the obtained information is identical to the case where there exists a tag having the same tag name in the upper hierarchical level, and thus, description thereof will not be repeated.

In Fig. 1A, conversion is carried out to reflect the 'color' attribute value of 'black', and as a result, tag 303 is converted to tag 403 '<font2 color="red"/>' in Fig. 1B, and tag 308 is converted to tag 408 '<font2 color="black"/>' in Fig. 1B. Similar to the 'p2' tag, the 'font2' tag differs from the 'font' tag in that it has an effective range that lasts until the subsequent change in attribute by a 'font2' tag.

### (Supplementary Description of the Conversion Processing)

When the conversion processing is carried out for all the tags in XML data 300 of Fig. 1A, the output result becomes as indicated by XML data 400 in Fig. 1B. In Fig. 1B, there is not any tag described with a start tag and an end tag having a child element forming a hierarchical structure, and the entire data is described with empty tags having no hierarchical structure.

The conversion processing is not restricted to the one focusing on the end tags. The similar conversion may be carried out focusing on the start tags instead of the end tags.

Further, the conversion processing may be omitted for the end tag located at the end of the XML data. For example, in Fig. 1A, when there is no data following tag 310, tag 310 does not need to be converted to tag 410'<p2 indent="0"/>' in Fig. 1B, i.e., the conversion may be left undone. This is because the information of tag 410 is unnecessary since there is no data following tag 410. In this case, in Fig. 1B, character string 409 'PQRST' becomes the end of the data. Omitting the conversion can reduce the data capacity of XML data 400 after conversion.

### (Description of Display Device (Fig. 6))

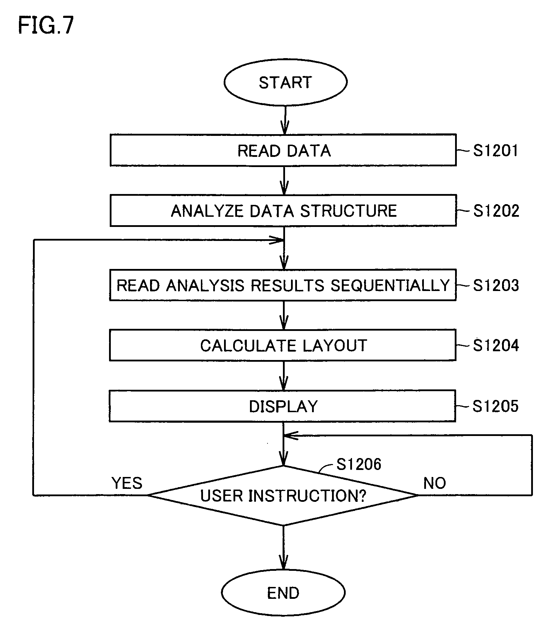

Hereinafter, the display device will be described. Fig. 6 shows a configuration example of the display device in Fig. 2, together with other devices constituting the data processing system including the display device. Specifically, network 211, recording medium 212, data processing device 213 having data 203, and display device 214 in Fig. 6 correspond to network 111, recording medium 112, data processing device 113 and display device 110, respectively, in Fig. 2. Further, data 201 and 202 in Fig. 6 correspond to data 101 and 102 in Fig. 2. Fig. 7 shows a flowchart of the display processing of display device 214.

Display device 214 includes an input portion 204, a data storage portion 205, a data structure analysis portion 206, a layout calculation portion 207, a display portion 208, a control portion 209, and an instruction input portion 210 that inputs an externally provided instruction 215 and outputs the same to control portion 209.

Input portion 204 reads any of data 201 transmitted via network 211, data 202 prerecorded on recording medium 212, or data 203 that is an output of data processing device 213 (S1201). Data 201, 202 and 203 are data having been processed in data processing device 213. Data storage portion 205 stores data 201, data 202 or data 203 read by input portion 204.

Hereinafter, procedure of the data display processing will be described with reference to the flowchart in Fig. 7.

### (Description of Data Structure Analysis Portion 206)

Firstly, data structure analysis portion 206 analyzes the data structure of data 201, data 202 or data 203 stored in data storage portion 205 (S1202). Since data 201, data 202 or data 203 is data of a structured document where the hierarchical structure has been resolved and no longer exists as shown in Fig. 1B, data structure analysis portion 206 is required to analyze only the tag information and the character strings, without the need of performing the hierarchical structure analyzing processing. In Fig. 1B, it analyzes (specifies) that character strings 401 'ABCDE', 404 'FGHIJ', 406 'KLMNO', 409 'PQRST' and 411 'UVWXY' are character strings, and that tags '<p2 indent="1"/>', 403, 405, 407, 408 and 410 are tags. The results of analysis are output to layout calculation portion 207.

### (Description of Layout Calculation Portion 207)

Layout calculation portion 207 sequentially reads the results of analysis of the tags and character strings that are output from data structure analysis portion 206 (S1203). It calculates a layout, such as indent, for display based on the read information (S1204). In the case of Fig. 1B, character string 401 is firstly read and its layout is calculated. The layout of character string 404 is then calculated based on the information of tag 402 and tag 403 read subsequently. When the information of tag 405 is read and obtained next time, it is unnecessary to hold the information of tag 402 that is a 'p2' tag the same as tag 405. In data processing device 213, the hierarchical structure has been analyzed in advance and converted to the tag information designating the change of display manner. The information of tag 402 has been reflected to tag 405. Thus, the layout of character string 406 may be calculated based on the information of tags 403 and 405. Thereafter, similarly, when tag information having the same tag name is obtained, the tag information of the same tag name previously read does not have to be held. That it is unnecessary to hold the tag information of the same tag name means that the memory capacity used can be reduced. The data laid out in accordance with the results of calculation is supplied to and displayed by display portion 208.

### (Description of Other Portions)

Display portion 208 inputs from layout calculation portion 207 the data laid out based on the calculated results, and externally displays the same (S1205). When data 400 in Fig. 1B is processed, the display as in Fig. 5 is obtained, as in the case of Fig. 1A. Control portion 209 controls the flow of a series of processing by input portion 204, data storage portion 205, data structure analysis portion 206, layout calculation portion 207, and display portion 208. Instruction input portion 210 inputs an instruction 215 from a user operating display device 214, and outputs the same to control portion 209 (S1206). When there is an instruction 215 from the user concerning the change in display layout, the processing of sequentially reading the analysis results of the tags and others is carried out again (S1203), and the layout is recalculated using the changed contents as instructed, and displayed. When there is no instruction 215 from the user, the waiting state is maintained until the user instruction 215 is received. When there is a user instruction 215 to terminate the display processing, the entire display processing is terminated.

As described above, in data processing device 213, data 300 of the structured document having a hierarchical structure is converted in advance to data 400 of the structured document no longer having the hierarchical structure. This allows data 400 to be displayed on display device 214, and also enables high-speed display processing, since the processing of analyzing the hierarchical structure can be omitted. Further, it is unnecessary to store the hierarchical structure, which can reduce the capacity of the memory used.

### (Second Embodiment)

Hereinafter, a second embodiment of the present invention will be described.

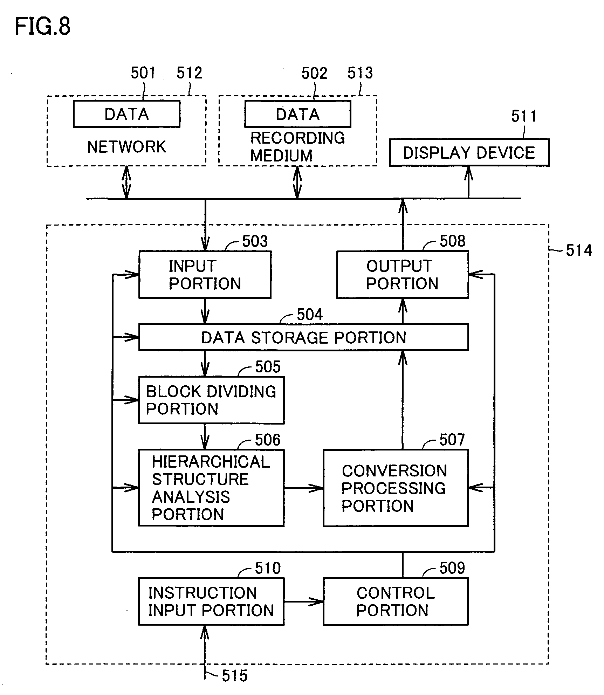

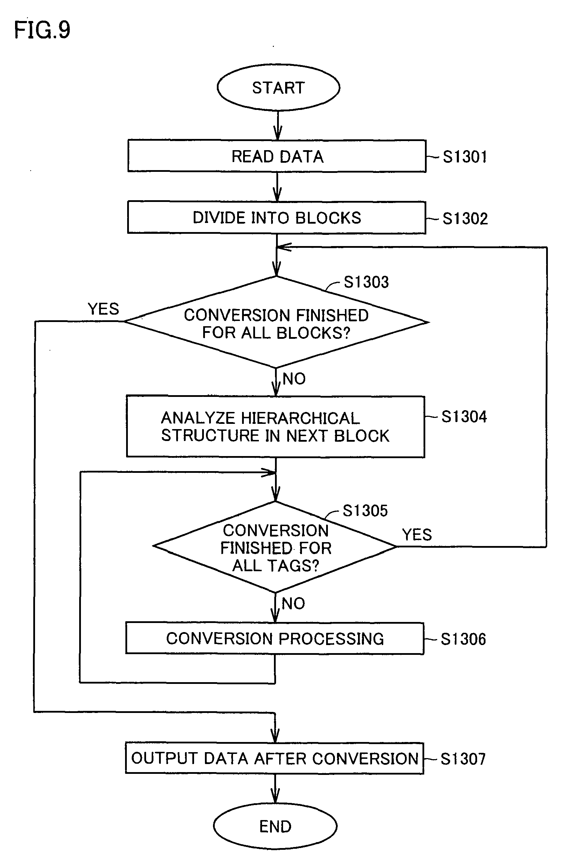

Fig. 8 shows a block configuration example of a data processing device according to the second embodiment of the present invention, together with the other devices constituting the data processing system including the data processing device. Fig. 9 is a flowchart illustrating the data processing according to the second embodiment of the present invention.

Referring to Fig. 8, the data processing system includes a network 512, a recording medium 513, a data processing device 514, and a display device 511.

Network 512 is connected to data processing device 514, and to a server or another personal computer having a database with data recorded therein. Data 501 is provided via network 512 to data processing device 514. Recording medium 513 has data 502 prerecorded, and is used for providing data 502 to data processing device 514. Recording medium 513 may be any of FD, CD-ROM, hard disc and others. Data processing apparatus 514 receives and processes data 501 and 502 provided from network 512 and recording medium 513, for outputting externally. Display device 511 receives and displays the information output from data processing device 514. Display device 511 will be described later in detail. Further, the information output from data processing device 514 may be transmitted to a not-shown external device via network 512, or may be recorded on recording medium 513.

Data 501 and 502 are similar to data 101 and 102 in Fig. 2 in the first embodiment, and thus, description thereof will not be repeated.

Data processing device 514 includes an input portion 503, a data storage portion 504, a block dividing portion 505, a hierarchical structure analysis portion 506, a conversion processing portion 507, an output portion 508, a control portion 509, and an instruction input portion 510.

Data processing procedure of data processing device 514 will now be described with reference to the flowchart shown in Fig. 9. Input portion 503 reads data 501 or data 502 (S1301). Data storage portion 504 stores data 501 or data 502 read by input portion 503. Block dividing portion 505 performs block dividing processing in which data 501 or data 502 stored in data storage portion 504 is divided into a plurality of block units (S1302).

### (Description of Block Dividing Processing)

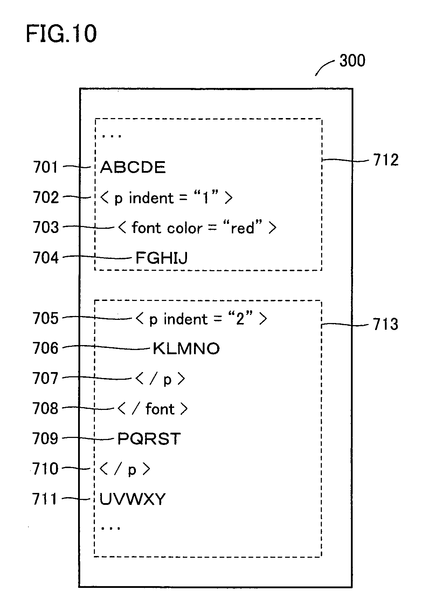

Hereinafter, the block dividing processing will be explained. Fig. 10 shows the portion where XML data 300 in Fig. 1A is divided into block units. In Fig. 10, reference characters 301-311 in Fig. 1A are replaced with reference characters 701-711 for use in explanation. The contents shown by reference characters 701-711 correspond to those shown by reference characters 301-311.

In Fig. 10, it is assumed that XML data 300 is divided between character string 704 'FGHIJ' and tag 705 '<p indent="2">' and, as a result, XML data 300 is divided into two blocks, a block 712 and a block 713.

Each block is made to have a fixed size, as a rule. The data is divided into blocks based on a tag that is described in the vicinity of the portion satisfying the fixed size. That is, rather than dividing the data into blocks each having exactly the fixed size, the data is divided before or after description of the tag, so as to avoid the inconvenience that the tag description itself is divided into pieces. The tag description divided into pieces would make it impossible to analyze the individually read blocks. If there is no tag convenient for division of the data into blocks of approximately the fixed size, then such a tag is searched for over a wider range. It is assumed that the fixed size used as a reference is initially defined. The defined size should be a size suitable for processing by display device 511.

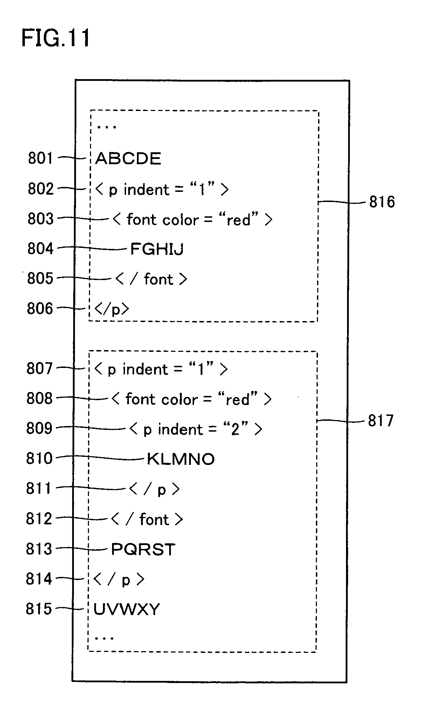

In the block dividing processing, if a child element of the tag having the hierarchical structure is divided, i. e., if the child element of tag 702 '<p indent="1">' and tag 703 '<font color="red">' is divided and thus the layout calculation is not possible, then, processing of compensating for the information of the divided tags for the parts of the data before and after the divided position (hereinafter, referred to as "interpolation processing") is carried out. Fig. 11 shows that such interpolation processing has been conducted for the data of Fig. 10.

The contents shown by reference characters 801-804 and 809-815 in Fig. 11 correspond to those shown by reference characters 701-704 and 705-711 in Fig. 10. The block 816 in Fig. 11 shows data corresponding to data of the block 712 in Fig. 10 to which a tag 805 '</font>' as an end tag corresponding to tag 803 '<font color="red">' and a tag 806 '</p>' as an end tag corresponding to tag 802 '<p indent=" 1">' are added. Further, the block 817 shows data corresponding to data of the block 713 in Fig. 10 to which a tag 808 '<font color="red">' as a start tag corresponding to tag 812 '</font>' and a tag 807 '<p indent=" 1">' as a start tag corresponding to tag 814 '</p>' are added. With the above-described interpolation processing adding the corresponding start tag or end tag, each of blocks 816 and 817 has the XML data of which layout calculation is possible.

### (Description of Hierarchical Structure Analysis Portion 506)

Hierarchical structure analysis portion 506 inputs the XML data having undergone the dividing processing by block dividing portion 505, analyzes the tag information and the hierarchical structure in each of the blocks, and outputs information of the analysis results to conversion processing portion 507 (S 1304). The analyzing processing of hierarchical structure analysis portion 506 is similar to that of hierarchical structure analysis portion 105 in Fig. 2 in the first embodiment, and thus, description thereof will not be repeated.

### (Description of Conversion Processing Portion 507)

Conversion processing portion 507 performs conversion processing on the tags having a hierarchical structure, based on the information of the analysis results provided from hierarchical structure analysis portion 506 (S1306). The conversion processing is similar to that of the first embodiment, and thus, description thereof will not be repeated.

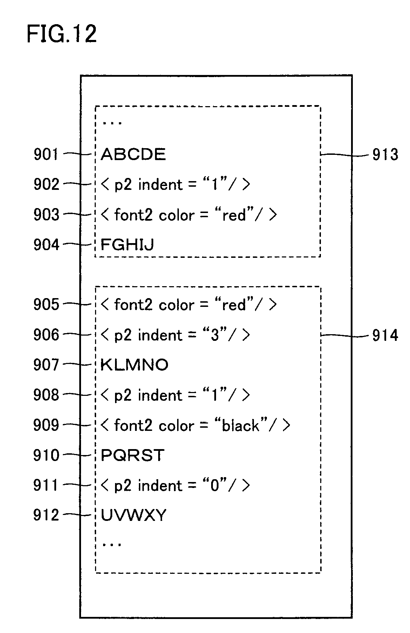

Fig. 12 shows the data of Fig. 11 having undergone the conversion processing. In block 816 in Fig. 11, there is no data after tags 805 and 806. Thus, the conversion processing is not done, and conversion is omitted. Consequently, the block 913 in Fig. 12 corresponding to block 816 includes character strings 901 and 904, and tags 902 and 903, with character string 904 'FGHIJ' being the end of block 913. Following the determination as to whether the conversion processing has been done for all the tags, the conversion processing is ended (S1305). The block 914 in Fig. 12 corresponding to block 817 includes character strings 907, 910 and 912, and tags 905, 906, 908, 909, and 911.

It is then determined whether the above-described analyzing processing and conversion processing have been finished for all the blocks (S1303), and if so, the converted data is stored again in data storage portion 504. Output portion 508 reads the converted data stored in data storage portion 504, and externally outputs the same (S1307).

Control portion 509 controls the flow of a series of processing by input portion 503, data storage portion 504, block dividing portion 505, hierarchical structure analysis portion 506, conversion processing portion 507, and output portion 508. Instruction input portion 510 transmits an instruction 515 of the user operating data processing device 514, to control portion 509.

The data processing may be carried out for the XML data having already been divided into block units. When data 501 and 502 have already been divided into block units, in block dividing portion 505, the block dividing processing is further applied in the blocks, or the block dividing processing is omitted. The subsequent analyzing processing by hierarchical structure analysis portion 506 and the conversion processing by conversion processing portion 507 may be carried out in the similar manner.

### (Description of Display Device 511)

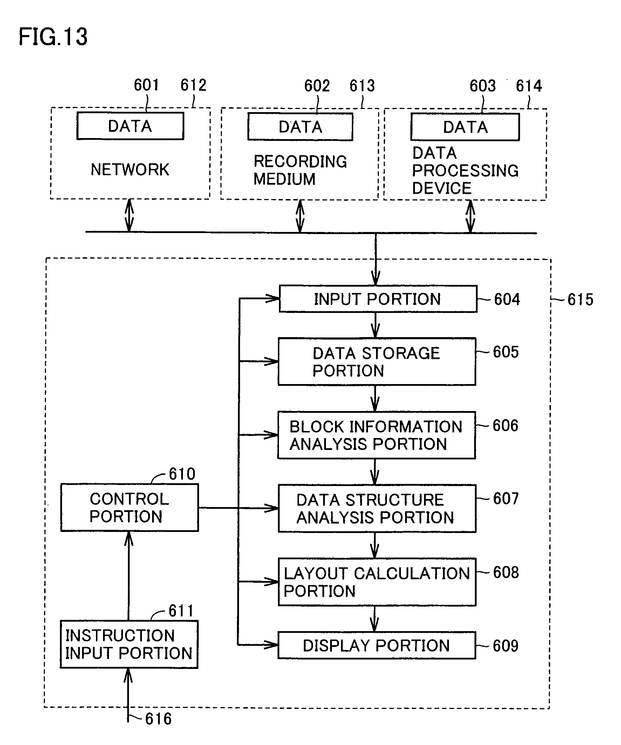

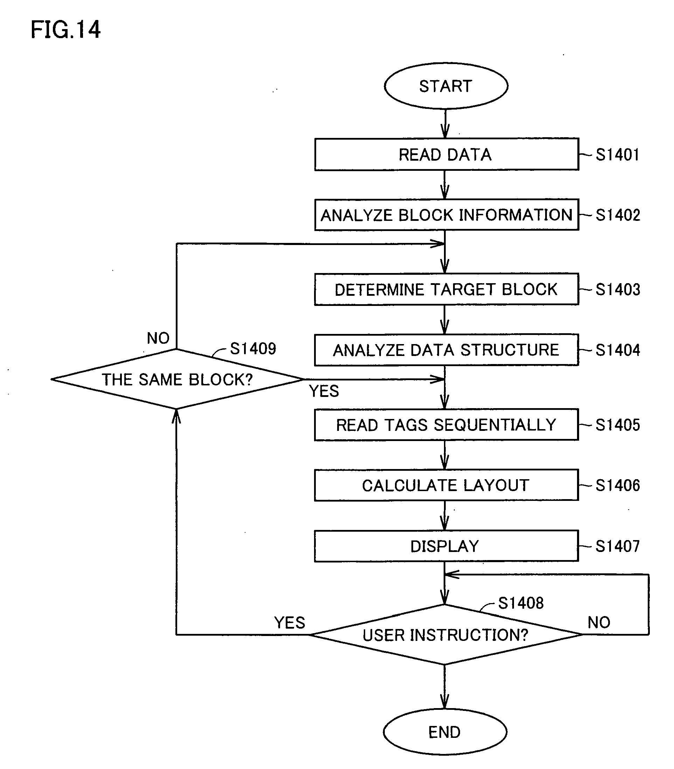

Hereinafter, the display device will be described. Fig. 13 shows a block configuration example of display device 511 in Fig. 8, together with the other devices constituting the data processing system including the display device. Specifically, network 612, recording medium 613, data processing device 614, and display device 615 in Fig. 13 correspond to network 512, recording medium 513, data processing device 514, and display device 511, respectively, in Fig. 8. Fig. 14 is a flowchart illustrating the display processing of display device 615.

Display device 615 includes an input portion 604, a data storage portion 605, a block information analysis portion 606, a data structure analysis portion 607, a layout calculation portion 608, a display portion 609, a control portion 610, and an instruction input portion 611.

Input portion 604 reads any of data 601 received via network 612, data 602 prerecorded on recording medium 613, or data 603 that is an output of data processing device 614 (S1401). Data 601, 602 and 603 are those processed in data processing device 614. Data storage portion 605 stores data 601, data 602 or data 603 read by input portion 604.

Display processing procedure will now be described with reference to the flowchart in Fig. 14.

Firstly, block information analysis portion 606 analyzes block information of data 601, data 602 or data 603 stored in data storage portion 605 (S1402). It then determines a target block necessary for display, based on the analysis of the block information (S1403). Since the target block necessary for display is determined, it becomes unnecessary to analyze all the data of data 601, 602 or 603 from the beginning (top) thereof. Only the data in the block necessary for display is analyzed, which can reduce the processing load.

The position of the block necessary for display corresponds to the position of the first block in the case of a display device that displays the content of XML, data always from the beginning (top), whereas in the case of a display device that records positional information indicating the position displayed last time, it corresponds to the position of the block based on the recorded positional information.

Further, the number of blocks necessary for display is determined based on the size of the display screen or the display settings. For example, in the case where the display setting is 50 letters, if one block contains 30 letters, at least two blocks, and at most 3 blocks are required for display. In the case of a layout including an image, the number of blocks necessary for display is determined based on the number of pixels or the like.

In accordance with the above-described determination of the block position and the number of blocks for display, blocks of the determined number from the determined block position become the target blocks necessary for display.

The process of the steps S1404-S1407 in data structure analysis portion 607, layout calculation portion 608 and display portion 609 are identical to the process of the steps S1202-S1205 in Fig. 7 of the first embodiment, and thus, description thereof will not be repeated.

Control portion 610 controls the flow of a series of processing by input portion 604, data storage portion 605, block information analysis portion 606, data structure analysis portion 607, layout calculation portion 608, and display portion 609.

Instruction input portion 611 receives an instruction 616 of the user operating display device 615, and outputs the same to control portion 610 (S1408). When such user instruction 616 is received, if the blocks to be displayed coincide with the blocks displayed previously, then the processing of reading the tags sequentially is carried out again and the layout is calculated again for display. If they are not the same blocks, the process starts with determination of the target blocks for display (S1409). If there is no input of user instruction 616, the waiting state is maintained until user instruction 616 is received. When an instruction 616 to terminate the processing is input from the user, the entire display processing is terminated.

Herein, the user instruction 616 is the instruction input as the user manipulates display device 615 itself. For example, assuming a portable phone, manipulation of the crisscross button (manipulation button to up, down, left and right) or the decision button produces the instruction. User instruction 215 in Fig. 6 has the similar content.

The display blocks are determined in response to the manipulation generating the user instruction. For example, it is assumed that when a content of XML data is opened (displayed), the top of the first block is displayed. When the user manipulates a not-shown down button of instruction input portion 611 to scroll the layout, the layout calculating processing is repeated during the state where the information required for display is within the first block (operation in the case of YES in S1409). If the down button is manipulated with the last information in the first block having been laid out and displayed, information of the second block becomes necessary (operation in the case of NO in S1409). In such a case, the second block now required is subjected to the display processing together with the first block. This corresponds to determination of the display blocks.

As described above, in data processing device 514, the data of structured document having a hierarchical structure is divided into block units, and converted in advance to data of structured document no longer having the hierarchical structure. This reduces the load of display processing in display device 615, since it is not necessary to analyze all the data from the top of the data. Further, the processing of analyzing the hierarchical structure in the block is omitted, enabling high-speed display processing. Furthermore, the capacity of the memory used is reduced, since it is unnecessary to store the hierarchical structure.

In the present embodiment, data 501, 502, 601, 602 and 603 have been explained to be data described in XML by way of example. However, they are not restricted to those described in XML, as evident from the above explanation.

### (Manner of Use Common to First and Second Embodiments)

As the manner of use, data processing device 113 and data processing device 514 assume a server, and display device 215 and display device 615 assume a display device mounted to a mobile device such as a portable phone or a PDA (personal digital assistant).

In the server, data having a hierarchical structure is converted to data no longer having the hierarchical structure, which is distributed via a network to the mobile device. In the mobile device, the distributed data is received. Since no hierarchical structure exists in the data, the mobile device can rapidly process and display the received data. Not restricted to the portable type information processing device of mobile equipment, it may be a laptop (notebook) or desktop type personal computer. In such a personal computer as well, rapid data processing is possible since there is no hierarchical structure, and the data received is displayed on a display or the like.

Further, data processing devices 113 and 514 assume a personal computer, and display devices 214 and 615 assume a display device mounted to a mobile device such as a portable phone. In the personal computer, data having a hierarchical structure is converted to data having no hierarchical structure, which is recorded on a recording medium such as a FD. The recording medium containing the converted data can be carried and mounted to a mobile device, which enables the mobile device to read the data having no hierarchical structure and thus process and display the read data at high speed. Similarly, the display device may be mounted, not only to a mobile device, but also to a personal computer. Further, the data may be transmitted via the network, rather than using the recording medium.

According to the first and second embodiments described above, even if data 300 has a hierarchical structure, the hierarchical structure can be resolved in advance to convert the data to data 400 having no hierarchical structure, so that data 400 can be utilized instead of data 300 upon output of the data for display or the like. In doing so, the processing of analyzing the hierarchical structure upon output for display becomes unnecessary, which facilitates handling of the data, and thus, high-speed processing becomes possible. Further, since it is unnecessary to store the hierarchical structure separately, the capacity of the memory used can be reduced.

Furthermore, when the data is divided into block units, it is unnecessary to analyze the entire data from the beginning. This reduces the processing load. It is unnecessary to analyze the hierarchical structure within the block, so that more rapid output processing becomes possible.

### (Third Embodiment)

Hereinafter, a third embodiment of the present invention will be described. In the data processing device according to the present embodiment, electronic data is subjected to data processing using corresponding text data, tag appearance position data, and tag detail data, which are prepared separately. This makes it possible to omit the processing concerning the determination as to whether the data to be processed corresponds to the tag portion or the text portion, so that high-speed data processing becomes possible. This feature will be explained in the following.

### (Configuration of Data Processing Device)

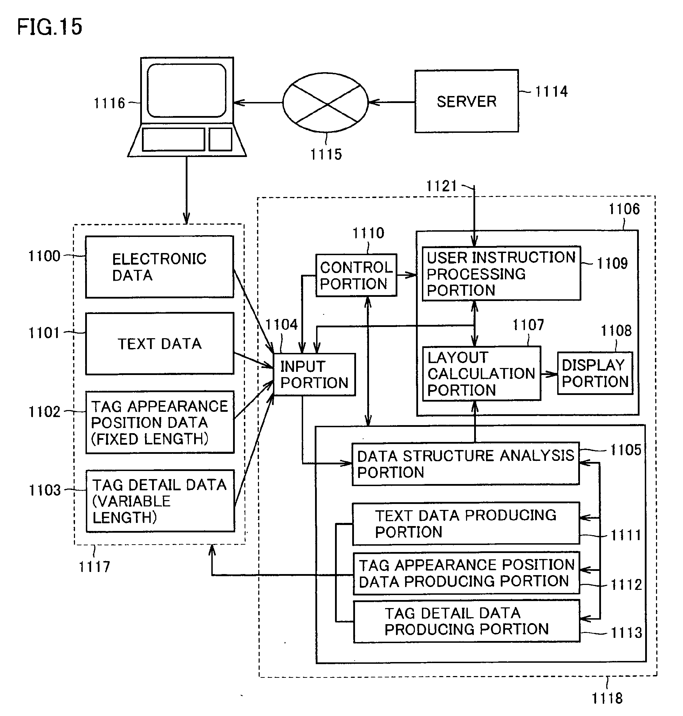

Fig. 15 shows a configuration of the data processing device of the present embodiment in association with peripheral devices. Provided in the periphery of the data processing device 1118 are a server 1114 that receives a request from a user and transmits electronic data recorded in a not-shown database, a personal computer 1116 for the user to receive the electronic data, a network 1115 connecting server 1114 to personal computer 1116, and a recording medium 1117 for reading the electronic data from personal computer 1116 and supplying the electronic data to data processing device 1118. Data processing device 1118 processes the electronic data provided from recording medium 1117. It performs data processing according to the objective, e.g., data processing for display. Herein, it is assumed that the electronic data is to be displayed, although another output manner, e.g., printout, can be selected as well.

Personal computer 1116 may be replaced with an electronic data receiver device placed in a convenience store, a station yard or the like, and the electronic data may be read from the electronic data receiver device and recorded on recording medium 1117. In this case, billing is possible when the electronic data is read from the electronic data receiver device and recorded on recording medium 1117.

Further, the electronic data transmitted from server 1114 may be received, not via personal computer 1116, but directly by data processing device 1118, and recorded on recording medium 1117.

Recording medium 1117 stores electronic data 1100 as well as text data 1101, tag appearance position data 1102 and tag detail data 1103 having been produced from the relevant electronic data 1100, associated with each other by personal computer 1116 or another device. Herein, for simplification of explanation, it is assumed that recording medium 1117 stores only one set of electronic data 1100 and data produced therefrom that are associated with each other, although it may store a plurality of such sets.

Electronic data 1100 is data structured to enable execution of prescribed processing in accordance with definition of a document description language, and described using SGML, XML or the like that is the data format for recording a structured document having a hierarchical structure employing a plurality of tags.

Text data 1101 is data indicating only the content to be displayed from among the structured electronic data 1100. Tag appearance position data 1102 is data designating information showing the tag name of each tag, information showing the appearance position of each tag in text data 1101 and information showing the storage position of the attribute information of each tag in tag detail data 1103, from among the tag information necessary for processing corresponding text data 1101. The tag appearance position data is configured with only the fixed length data. Tag detail data 1103 is data designating information of attribute and others of each tag, from among the tag information necessary for processing corresponding text data 1101. The tag detail data is configured with variable length data.

The data transmitted from server 1114 and stored in recording medium 1117 may be only the electronic data 1100, or may be only the three kinds of data of text data 1101, tag appearance position data 1102 and tag detail data 1103 that are produced from electronic data 1100.

Data processing device 1118 includes an input portion 1104, a data structure analysis portion 1105, a processing portion 1106, a control portion 1110, a text data producing portion 1111, a tag appearance position data producing portion 1112, and a tag detail data producing portion 1113.

Input portion 1104 reads electronic data 1100, text data 1101, tag appearance position data 1102 and tag detail data 1103 from recording medium 1117.

Data structure analysis portion 1105 analyzes the hierarchical structure of electronic data 1100, based on electronic data 1100, or based on text data 1101, tag appearance position data 1102 and tag detail data 1103.

Text data producing portion 1111 produces text data 1101 from electronic data 1100 when no text data 1101 exists. In the case where the data transmitted from server 1114 includes text data 1101, tag appearance position data 1102 and tag detail data 1103, text data producing portion 1111 may be omitted.

Tag appearance position data producing portion 1112 produces tag appearance position data 1102 from electronic data 1100 when no tag appearance position data 1102 exists. When the data transmitted from server 1114 contains text data 1101, tag appearance position data 1102 and tag detail data 1103, tag appearance position data producing portion 1112 may be omitted.

Tag detail data producing portion 1113 produces tag detail data 1103 from electronic data 1100 when no tag detail data 1103 exists. When the data transmitted from server 1114 includes text data 1101, tag appearance position data 1102 and tag detail data 1103, tag detail data producing portion 1113 may be omitted.

Control portion 1110 controls the processing in input portion 1104, data structure analysis portion 1105, text data producing portion 1111, tag appearance position data producing portion 1112, tag detail data producing portion 1113, and processing portion 1106.

Processing portion 1106 performs prescribed processing based on the results of analysis of the hierarchical structure by data structure analysis portion 1105. Specifically, processing portion 1106 has its configuration suited to the content of the target electronic data or the kind of the processing. When data processing device 1118 is for displaying electronic document or electronic data exchanged over the Internet, or for displaying electronic data of writings such as a book, a textbook, a magazine, a novel, an article or the like, processing portion 1106 includes a display portion 1108 for displaying the electronic data based on a display layout calculated by a layout calculation portion 1107 that calculates the display layout of the writings, and also includes a user instruction processing portion 1109 for processing an instruction 1121 from the user such as a scroll instruction.

When the electronic data is audio data, processing portion 1106 is modified to a device for reading the audio data aloud, in which case an audio reproduction portion is used for display portion 1108, and layout calculation portion 1107 is modified to a unit that distinguishes a part to be read aloud from a part not to be read aloud, that distinguishes a part to be read emphatically from a part not to be read emphatically, or that adjusts the intervals between the parts being read aloud. In the case of the audio data, it may be configured such that the data is read aloud with the audio attributes changed in accordance with the hierarchical structure. Further, in the case of the audio data, additional portions such as a scenario interpretation portion, an audio output portion, and a synchronization portion for synchronization of elements of the data for the purpose of management of the data being the reproduction source, will become necessary.

### (Implementation Example of Data Processing Device)

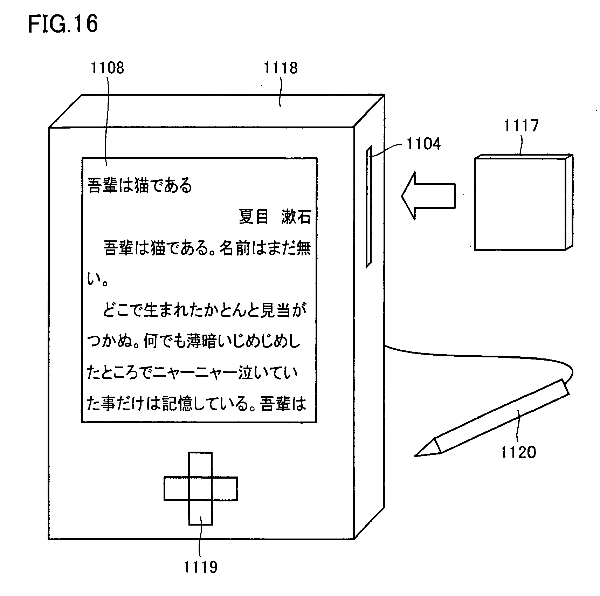

Fig. 16 shows a case where data processing device 1118 is implemented as a portable display processing device. In Fig. 16, display portion 1108 is configured with a liquid crystal display or the like. Recording medium 1117 is mounted to input portion 1104 in a detachable manner, and when mounted, electronic data 1100, or text data 1101, tag appearance position data 1102 and tag detail data 1103, having been prestored in recording medium 1117 and to be processed, is read out via input portion 1104. A crisscross key 1119 and a pen 1120 are provided in association with user instruction processing portion 1109, The user manipulates crisscross key 1119 to provide scroll instructions of a displayed document, or to instruct selection of electronic data 1100 of the book or the document that the user wants to make it displayed. When the electronic data includes a link function, the user uses pen 1120 to jump to the linked page. The pen is also used to input a reply to a confirmation requested to the user by control portion 1110 of data processing device 1118.

It is noted that supply of all or a part of electronic data 1100 or text data 1101, tag appearance position data 1102 and tag detail data 1103 to data processing device 1118 is not necessarily done via recording medium 1117. For example, a prescribed recording area may be provided inside the body of data processing device 1118, and a part or all of the above-described data may be recorded therein. Further, a part or all of the above-described data may be recorded in a not-shown database, and may be processed while being downloaded.

### (Description of Tag Appearance Position Data 1102)

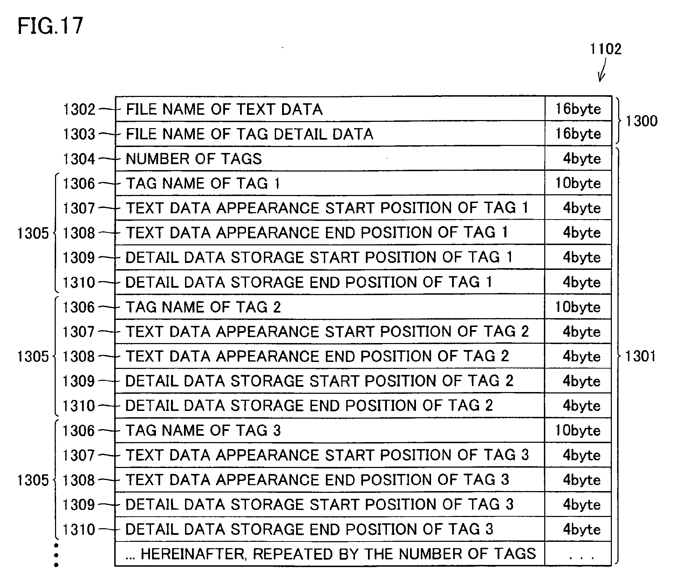

Fig. 17 shows an example of a structure of tag appearance position data 1102. Tag appearance position data 1102 includes file name information 1300 and tag appearance position information 1301. File name information 1300 includes data 1302 and 1303 showing the file name of corresponding text data 1101 and the file name of corresponding tag detail data 1103.

File name information 1300 shows to which text data 1101 or to which tag detail data 1103 the relevant tag appearance position data 1102 corresponds. Therefore, in the case where tag appearance position data 1102 is recorded in association with corresponding text data 1101, the area for data 1302 of the text data file name may be omitted. Further, when tag appearance position data 1102 is recorded in association with corresponding tag detail data 1103, the area for data 1303 of the tag detail data file name may be eliminated.

Tag appearance position information 1301 includes data 1304 indicating the total number of the tags included in corresponding text data 1101, and tag position data 1305 corresponding respectively to all the tags included in corresponding text data 1101. Each of tag position data 1305 includes data 1306 indicating the tag name of the corresponding tag, data 1307 and 1308 indicating the start position and the end position of appearance of the corresponding tag in text data 1101, and data 1309 and 1310 indicating the start position and the end position of the storage of the corresponding tag in tag detail data 1103. It is noted that data 1307 and 1308 indicate the positions of description of the start tag and the end tag in text data 1101. Data 1307-1310 are each recorded, e.g., by the number of bytes of the relevant tag from the top of each data (text data 1101 or tag detail data 1102).

Instead of the end position of appearance of the tag in text data 1101, the affecting range of the tag in text data 1101 may be recorded. Herein, the affecting range refers to the size (range) of the part of the text data in which the attribute of the tag is effective, which corresponds to the range from the appearance start position to the appearance end position, i.e., a difference obtained by (appearance end position - appearance start position). As such, data 1308 of the appearance end position can be obtained from the value of (appearance start position + affecting range) by recording the information of the affecting range instead of the information of the appearance position.

Similarly, instead of data 1310 showing the storage end position of the tag in tag detail data 1103, the data size of the tag in tag detail data 1103 may be recorded. The data size refers to the size from the storage start position to the storage end position, i.e., a difference obtained by (storage end position - storage start position). As such, even if the information of the data size is recorded instead of the information of the storage position, data 1310 of the storage end position can be obtained from the value of (storage start position + data size).

Each data constituting tag appearance position data 1102 is fixed length data, as shown in Fig. 17. Here, in the present embodiment, the fixed length data refers to data that will not exceed a prescribed size (of, e.g., 4 bytes) prepared in advance even if information indicated by electronic data 1100 varies. Thus, for example, when 4 bytes are assigned to data 1307 indicating the appearance start position of the tag in text data 1101 as shown in Fig. 17, it is necessary to input any value in a range from 0 to 4294967295 indicating the number of bytes from the top of the file of text data 1101. It is noted that the size of the area assigned to each data constituting tag appearance position data 1102 can be determined in accordance with the kind of electronic data 1100 to be handled or the processing capacity of data processing device 1118.

### (Description of Tag Detail Data 1103)

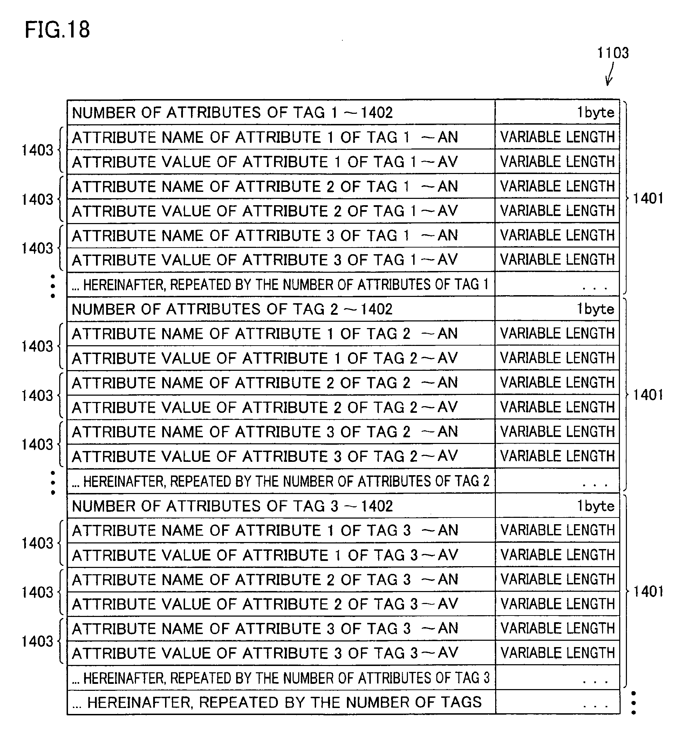

Fig. 18 shows an example of a structure of tag detail data 1103. Referring to Fig. 18, tag detail data 1103 includes tag detail data 1401 corresponding respectively to all the tags recorded in corresponding tag appearance position data 1102. Tag detail data 1401 includes data 1402 indicating the total number of different kinds of attributes indicated by the corresponding tag, and data 1403 corresponding respectively to all the kinds of attributes indicated by the corresponding tag. Data 1403 includes data AN indicating the name of the type of the corresponding attribute, and a value AV of the corresponding attribute. Tag detail data 1103 is basically configured with variable length data, since its size depends on the size of information of each tag, although it may be configured with fixed length data that is sufficiently large.

### (Specific Examples of Data)

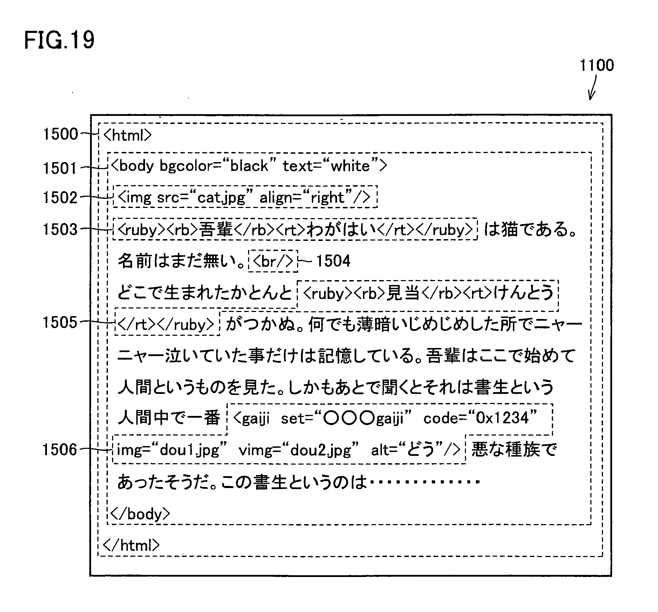

Hereinafter, formats of text data 1101, of each data in tag appearance position data 1102 and of each data in tag detail data 1103 will be explained using XHTML (extensible HTML) document that is a specific example of electronic data 1100 having a hierarchical structure described in accordance with definition of a document description language. In Fig. 19, an example of electronic data 1100 that is XHTML document to be processed is shown.

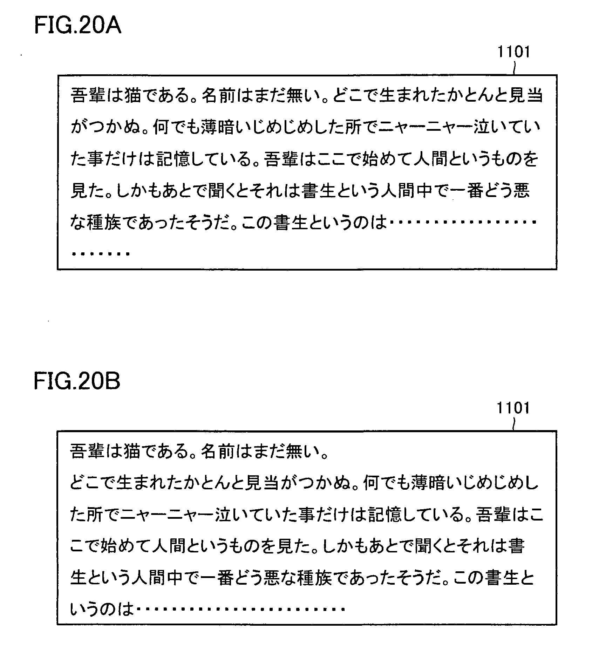

Fig. 20A shows an example of text data 1101 that is produced from electronic data 1100 of the XHTML document shown in Fig. 19. Basically, of the child elements sandwiched between the tags, the content to be displayed, i.e., only the character strings, is recorded in text data 1101. This is advantageous in that, even if data processing device 1118 is poor in processing capability and has difficulty in analyzing tag appearance position data 1102 and tag detail data 1103 and thus processes and displays text data 1101 alone, the user can at least understand the content of the document being described, based on the content having been displayed. Thus, there is a case where some of the content that is supposed to be displayed is not recorded in text data 1101. This will be explained using an example of the tag (hereinafter, referred to as "ruby tag") for use in setting rubies (kanas for phonetic representation of Chinese letters) to character strings.

In the case of the ruby tag 1503 shown in Fig. 19, the child element ' 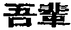 ' (Chinese letters representing "I") sandwiched between the start tag <rb> and the end tag </rb> and the child element ' 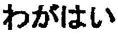 ' (kanas representing "I") sandwiched between the start tag <rt> and the end tag </rt> are recorded in text data 1101. In this state, however, the content to be displayed according to the content recorded in text data 1101 becomes ' 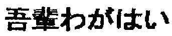 ', which makes no sense.

Thus, ruby tag 1503 is converted to <ruby2 rt= " 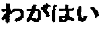 "> 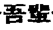 </ruby2>In the present embodiment, <ruby2> is the tag for the rubies, which has the 'rt' attribute designating a ruby character string, and which designates as the child element the character string to which the rubies are applied. By converting ruby tag 1503 to the element using the <ruby2> tag, the child element ' 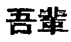 ' is recorded in text data 1101, while the 'rt' attribute value ' 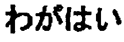 ' is recorded in tag detail data 1103. The content to be recorded in tag detail data 1103 in this case will be described later.

The ruby tag 1505 is similarly converted to <ruby2 rt=" 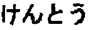 "> 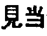 </ruby2>, and the child element ' 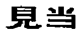 ' is recorded in text data 1101, while the 'rt' attribute value ' 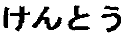 ' is recorded in tag detail data 1103.

Not limited to the ruby tags, any child element that is normally to be recorded in text data 1101 may be subjected to similar processing, as long as converting the relevant child element to an attribute value of the corresponding tag and recording the same in tag detail data 1103 can facilitate comprehension of the content of text data 1101.

In contrast to the case of the ruby tag described above, there is a case where a tag attribute value is recorded not in tag detail data 1103 but in text data 1101. This will be explained using an example of the tag (hereinafter, referred to as "gaiji tag") for use in setting gaiji (external or user-defined characters).

In the present embodiment, <gaiji> is the tag for the gaiji, which has a plurality of types of attributes including: a 'set' attribute for designating a character font name, a 'code' attribute for designating the position within the character font designated by the relevant 'set' attribute, an 'img' attribute for designating a substitute image for display in horizontal writing, a 'vimg' attribute for designating a substitute image for display in horizontal writing, and an 'alt' attribute for designating a substitute character string.

In the case of the gaiji tag 1506 shown in Fig. 19, normally, nothing is recorded in text data 1101. Without modification, the content to be recorded in text data 1101 will be: "... 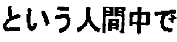 - 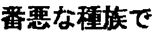 ...'("... a member of the most -cious human species... "), which makes no sense when displayed. Thus, gaiji tag 1506 is converted to <gaiji2 set="000 gaiji" code="0x1234" img="dou1. jpg" vimg="dou2.jpg"> 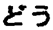 </gaiji2>. Here, in the present embodiment, <gaiji2> is the tag for the gaiji, which has a plurality of types of attributes including: the 'set' attribute for designating a character font name, the 'code' attribute for designating the position within the character font designated by the relevant 'set' attribute, the 'img' attribute for designating a substitute image for display in horizontal writing, and the 'vimg' attribute for designating a substitute image for display in horizontal writing, and which designates a substitute character string as the child element.

Thus, by converting the gaiji tag 1506 in Fig. 19 to the element using the <gaiji2> tag, the child element ' 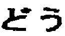 ' is recorded in text data 1101, while the other attribute values are recoded in tag detail data 1103. The content to be recorded in tag detail data 1103 will be described later. As a result, the content to be recorded in text data 1101 becomes "... 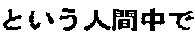 - 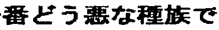 ..." ("a member of the most ferocious human species... "), so that a meaningful sentence is obtained.

Not limited to the gaiji tags, those for which nothing is normally recorded in text data 1101 may also be subjected to similar processing, as long as converting the attribute value to a child element and recording the same in text data 1101 can facilitate understanding of the content of text data 1101.

Fig. 20B shows another example of text data 1101 that is produced from electronic data 1100 of the XHTML document shown in Fig. 19. In Fig. 20B, there is actually a line feed where a linefeed tag 1504 is located. This helps understanding of the content of text data 1101. In this case, it may be configured such that information of linefeed tag 1504 is recorded in tag appearance position data 1102 and that the linefeed information in text data 1101 is not used in layout calculation portion 1107. On the contrary, it may be configured such that the information of linefeed tag 1504 is not recorded in tag appearance position data 1102 and that the linefeed information in text data 1101 is used in layout calculation portion 1107.

Not limited to the linefeed tags, any tag in text data 1101 that does not normally designate linefeed may be subjected to the linefeed processing, as long as it facilitates understanding of text data 1101.

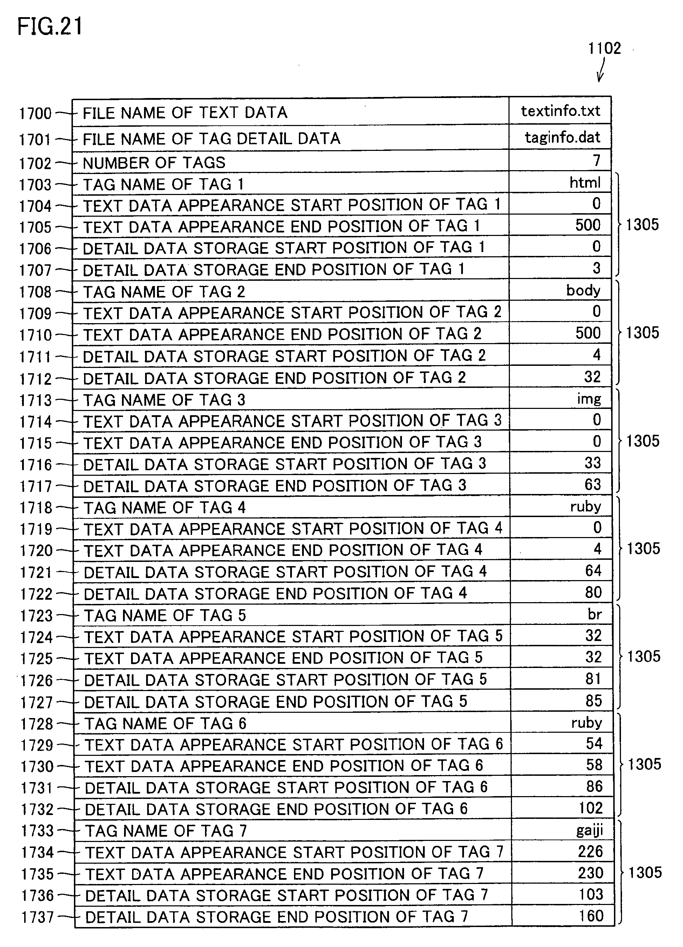

Fig. 21 shows an example of tag appearance position data 1102 that is produced from electronic data 1100 of the XHTML document shown in Fig. 19. Data 1700-1702 in Fig. 21 correspond to data 1302-1304 in Fig. 17. Data 1702 indicates the number of tags (tag pairs) included in electronic data 1100 in Fig. 19. Originally, the number of the tags constituting electronic data 1100 of the XHTML document of Fig. 19 is 11. However, as described above, three tags of <ruby> tag, <rb> tag and <rt> tag constituting the ruby element are converted into one tag. Thus, the number of the tags is 7, and data 1702 in Fig. 21 indicates '7'. Data 1703-1707 correspond to data 1306-310 of tag position data 1305 of the first tag, <html> tag 1500. Data 1703 indicates the tag name, 'html', data 1704 indicates the appearance start position of <html> tag 1500 in text data 1101, and data 1705 indicates the appearance end position of <html> tag 1500 in text data 1101. Next, data 1706 indicates the storage start position of the attribute information of <html> tag 1500 in tag detail data 1103, and data 1707 indicates the storage end position of the attribute information of <html> tag 1500 in tag detail data 1103. Thereafter, in the similar manner, data 1708-1712 indicate information for tag appearance position data 1305 of the second tag, <body> tag 1501, data 1713-1717 indicate information for tag appearance position data 1305 of the third tag, <img> tag 1502, data 1718-1722 indicate information for tag appearance position data 1305 of the fourth tag, <ruby> tag 1503, data 1723-1727 indicate information for tag appearance position data 1305 of the fifth tag, <br> tag 1504, data 1728-1732 indicate information for tag appearance position data 1305 of the sixth tag, <ruby> tag 1505, and data 1733-1737 indicate information for tag appearance position data 1305 of the seventh tag, <gaiji> tag 1506.

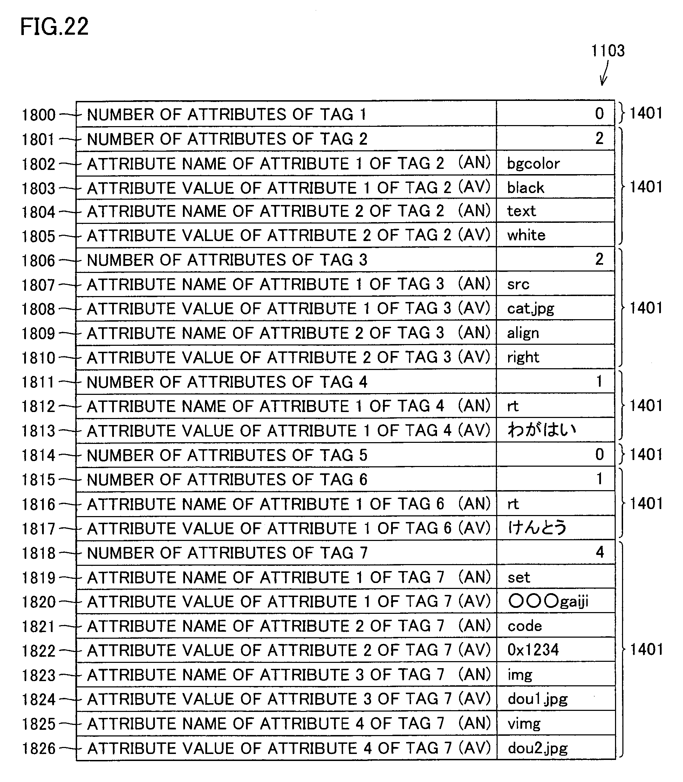

Fig. 22 shows an example of tag detail data 1103 that is produced from electronic data 1100 of the XHTML document shown in Fig. 19. Data 1800 corresponding to data 1402 indicates the number of attributes '0' of the first tag, <html> tag 1500. The start position information and the end position information of the area where this information is recorded are recorded as data 1706 and 1707 in tag appearance position data 1102. Since the number of attributes of <html> tag 1500 is '0', it is possible to record data 1706 and 1707 in tag appearance position data 1102 to show "there is no storage area", instead of recording data 1800 of the number of attributes information in tag detail data 1103. This can reduce the data capacity of tag detail data 1103.

Thereafter, in the similar manner, data 1801-1805 for tag detail data 1401 of the second tag, <body> tag 1501, data 1806-1810 for tag detail data 1401 of the third tag, <img/> tag 1502, and data 1811-1813 for tag detail data 1401 of the fourth tag, <ruby> tag 1503, are recorded in tag detail data 1103. Data 1814 for tag detail data 1401 of the fifth tag, <br/> tag 1504, is also recorded. Since <br/> tag 1504 has the number of attributes of '0' as does <html> tag 1500, data 1726 and data 1727 corresponding to tag appearance position data 1102 may be recorded to indicate that "there is no storage area", instead of recording the number of attributes in tag detail data 1103. Then, data 1815-1817 for tag detail data 1401 of the sixth tag, <ruby> tag 1505, and data 1818-1826 for tag detail data 1401 of the seventh tag, <gaiji> tag 1506, are recorded.

### (Processing Procedure of Data Processing Device 1118)

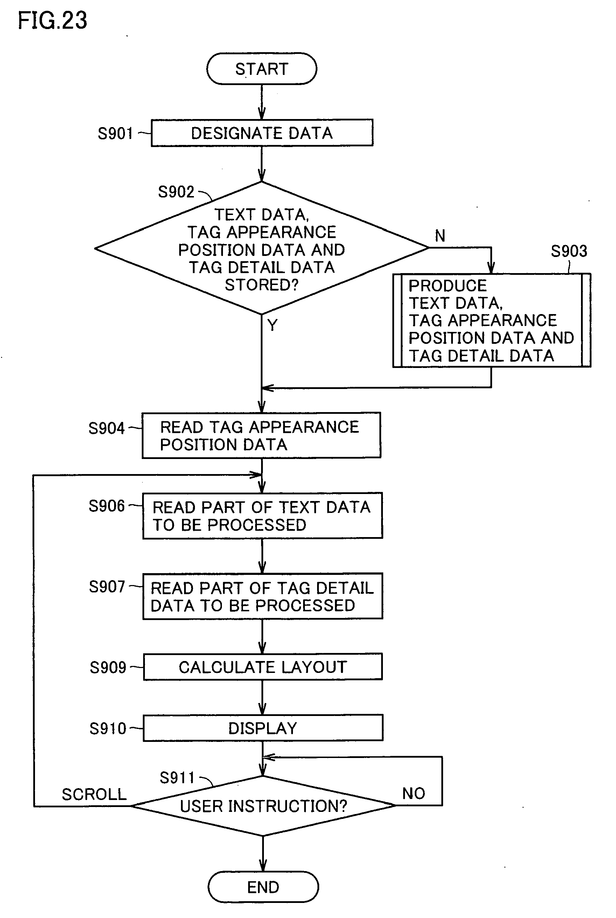

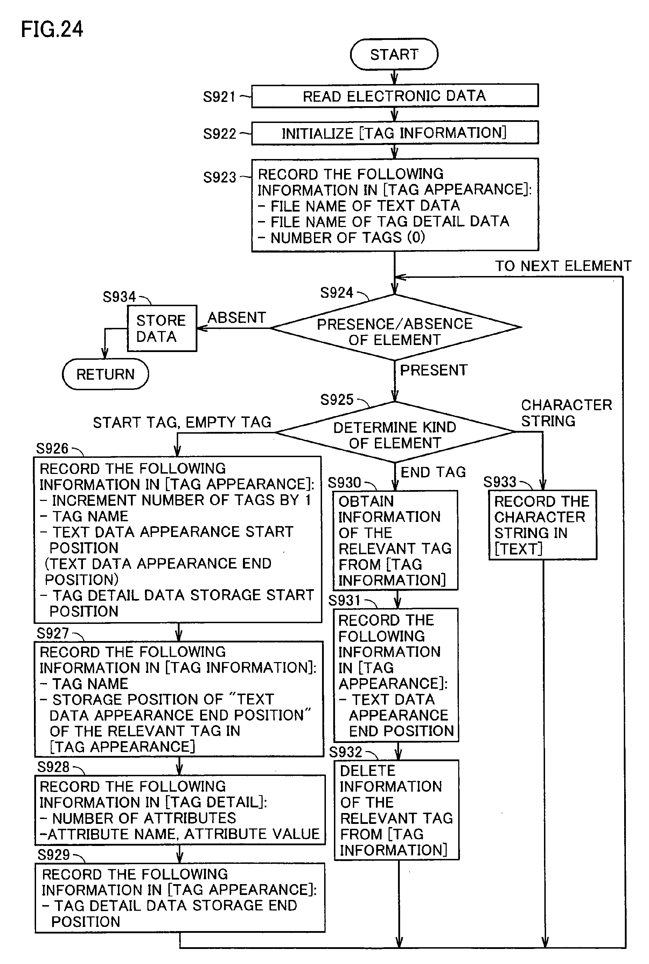

Processing procedure in the case where data processing device 1118 in Fig. 15 operates as a display device will be explained with reference to Figs. 23 and 24. The procedure shown in Figs. 23 and 24 is executed under the control of control portion 1110.

Firstly, in step S901, user instruction 1121 indicating electronic data 1100 the user wants to make it displayed is input via user instruction processing portion 1109, to designate the relevant electronic data 1100.

In step S902, input portion 1104 searches recording medium 1117 for the electronic data 1100 designated in step S901, and determines whether only electronic data 1100 designated is stored in recording medium 1117, or text data 1101, tag appearance position data 1102 and tag detail data 1103 corresponding to the designated electronic data 1100 are stored in recording medium 1117. As a result of search, if it is determined that only the desired electronic data 1100 is stored, control portion 1110 proceeds to step S903. If there exist corresponding text data 1101, tag appearance position data 1102 and tag detail data 1103, it proceeds to step S904.

In step S903, the designated electronic data 1100 is read from recording medium 1117, and text data 1101, tag appearance position data 1102 and tag detail data 1103 are produced for electronic data 1100 thus read. Thereafter, the process goes to step S904. Details of step S903 will be described later.

In step S904, tag appearance position data 1102 corresponding to the designated electronic data 1100 is retrieved from recording medium 1117 and read via input portion 1104.

In step S906, of text data 1101 in recording medium 1117 corresponding to the designated electronic data 1100, only arbitrary partial data that is to be processed is specified and read via input portion 1104. Specifically, the text data portion to be processed is specified and read, based on user instruction 1121 input in step S901. For example, if the electronic data 1100 designated by the user is to be subjected to display processing for the first time, the data is read from the beginning. If the electronic data 1100 designated is the one having undergone the display processing before, the information indicating the last display position in the previous display processing is recorded in a certain storage area of data processing device 1118, and the data is read from the position indicated by the thus recorded last display position information. Alternatively, if a page-jump function or the like is prepared for data processing device 1118, when user instruction 1121 is issued instructing to display an arbitrary portion of desired electronic data 1100, the page-jump function may be used to read the data from the position corresponding to the designated portion of the designated electronic data 1100.

In step S907, based on the partial data to be processed having been designated and read from text data 1101 in S906, corresponding partial data is read from tag detail data 1103 in recording medium 1117 via input portion 1104.

In step S907, attribute information of the tag to be processed can efficiently be read from tag detail data 1103, making use of the fact that tag appearance position data 1102 is the fixed length data. Specifically, if the information indicating the tag attribute is not separated to tag appearance position data 1102 and tag detail data 1103 and is recorded as a whole with variable length data, it would be necessary to check the whole tag attribute information from the beginning to determine whether it corresponds to desired data. The desired data refers to the tag information that should be processed. The ruby tag information will be unnecessary if data processing device 1118 used does not have the ruby display function. In contrast, in the present embodiment, the tag attribute information is recorded separately in tag appearance position data 1102 and tag detail data 1103, and tag appearance position data 1102 is the fixed length data. Accordingly, it is readily possible to specify in which byte of tag detail data 1103 the desired data is located by referring to tag appearance position data 1102, and to read the desired data by directly accessing tag detail data 1103 based on the specified result.

In step S909, a layout for display is calculated by layout calculation portion 1107. The layout is calculated in the following manner.

Firstly, at least one tag related to the partial data to be displayed in text data 1101 is specified based on the display start position information of text data 1101 determined by user instruction 1121 as well as the text data appearance start position/end position data of each tag in tag appearance position data 1102. Next, for each tag thus specified, data of the detail data storage start position/end position of the relevant tag is read from tag appearance position data 1102, and tag detail data 1401 corresponding to the relevant tag is read by searching tag detail data 1103 based on the read data.

Then, text data 1101 is laid out in a not-shown prescribed storage area sequentially from the display start position, based on tag detail data 1401 having been read in the above-described manner in association with from the text data appearance start position to the end position of the relevant tag.

In step S910, text data 1101 is displayed on display portion 1108, based on the content in the prescribed storage area as a result of the layout calculation in step S909.

In step S911, an input of instruction 1121 from the user via user instruction processing portion 1109 is awaited. The process is held in the waiting state in step S911 until there is an input of instruction 1121 from the user. When instruction 1121 to terminate the display processing is input from the user, the display processing shown in Fig. 23 is terminated. When instruction 1121 to scroll to a next or previous page is input from the user, the process returns to step S906, and thereafter, the similar processing is carried out for partial data in an arbitrary area of text data 1101 designated by the scroll.

The procedure of producing text data 1101, tag appearance position data 1102 and tag detail data 1103 in step S903 in Fig. 23 will now be explained with reference to the flowchart shown in Fig. 24. In the figure, [text], [tag appearance] and [tag detail] represent text data 1101, tag appearance position data 1102 and tag detail data 1103, respectively. In the figure, [tag information] refers to the information that is temporarily stored in a not-shown storage area within data processing device 1118 for the purpose of producing text data 1101, tag appearance position data 1102 and tag detail data 1103 from electronic data 1100. The [tag information] shows the tag name for each of one or more tags, and the recording position of data 1308 indicating the text data appearance end position of the relevant tag in tag appearance position data 1102.

Firstly, in step S921, desired electronic data 1100 designated is read from recording medium 1117 via input portion 1104, and the process proceeds to step S922.

In the processing in and after step S922, electronic data 1100 thus read is analyzed by data structure analysis portion 1105, and then, text data 1101, tag appearance position data 1102 and tag detail data 1103 are produced by text data producing portion 1111, tag appearance position data producing portion 1112 and tag detail data producing portion 1113, respectively, and the produced data are stored in association with desired electronic data 1100 designated in recording medium 1117. The procedure will now be explained.

Firstly, in step S922, the area of [tag information] necessary for producing each of the above-described data is initialized, and then the process proceeds to step S923.

In step S923, data 1302-1304 indicating text data file name, tag detail data file name and the number of tags are recorded in tag appearance position data 1102, and then the process proceeds to step S924. As data 1304 of the number of tags, the initial value of '0' is recorded in this case.

In the processing in and after step S924, electronic data 1100 read in step S921 is processed sequentially in units of elements from the top.

In step S924, electronic data 1100 is searched from the top to determine presence/absence of elements of character strings or tags. If there is no element, it means that electronic data 1100 has been processed to the last element, and in step S934, data to the effect that there is no element is stored in recording medium 1117. The data producing processing in Fig. 24 is terminated, and the process returns to the original process in Fig. 23. It may be configured to terminate the data producing processing by skipping the processing in step S934. If there is an element, the process proceeds to step S925.

In step S925, the kind of the element is determined. As a result of determination, if the element is a start tag or an empty tag, the process proceeds to step S926. If the element is an end tag, the process proceeds to step S930. If the element is a character string, the process proceeds to step S933.

In step S926, tag position data 1305 for the relevant tag element is recorded in tag appearance position data 1102.

More specifically, since the relevant element is a tag, the number of tags indicated by data 1304 is incremented by 1. Next, analysis is made as to whether the tag is a start tag or an empty tag, and a tag name is obtained based on the analysis result. The tag name obtained is recorded as data 1306 of tag position data 1305 for the relevant tag. Then, data 1307 designating the write end position of text data 1101 at the current point as the text data appearance start position is recorded. If the element is an empty tag, data 1308 designating the same value as data 1307 as the text data appearance end position is recorded. Further, data 1309 designating the write end position of tag detail data 1103 at the current point as the tag detail data storage start position is recorded. The process then proceeds to step S927.

In step S927, the tag name obtained in step S926 and the information of the storage position of data 1308 of the "text data appearance end position" of the relevant tag in tag appearance position data 1102 are additionally recorded in the [tag information] that should be temporarily stored. The process then proceeds to step S928.

In step S928, analysis is made as to whether the tag is a start tag or an empty tag, and the number of attributes, attribute name(s) and attribute value(s) of the relevant tag are obtained based on the analysis result. Those obtained are then recorded as data 1402 and data 1403 of tag detail data 1401 of the relevant tag in tag detail data 1103. The process then proceeds to step S929.

In step S929, the write end position of tag detail data 1103 at the current point is recorded in tag appearance position data 1102 as data 1310 of the tag detail data storage end position. The processing for the relevant element is thus finished. The process returns to step S924, to carry out the processing for the next element.

In step S930, the end tag is analyzed, and based on the analysis result, information of the tag name and the storage position of the [text data appearance end position] of the relevant tag is obtained from the [tag information] temporarily stored. The process then proceeds to step S931.

In step S931, data 1308 having the write end position of text data 1101 at the current point as the text data appearance end position is recorded in tag position data 1305 corresponding to the storage position of tag appearance position data 1102 indicated by the information obtained in step S930. The process then proceeds to step S932.

In step S932, the information of the relevant tag is deleted from the [tag information] temporarily stored. The processing for the relevant element is thus finished. The process returns to step S924 to process the next element.

In step S933, the character string of the element is recorded in text data 1101. The processing for the element is thus finished. The process returns to step S924 to process the next element.

When the above-described processing is carried out for all the elements in electronic data 1100, text data 1101, tag appearance position data 1102 and tag detail data 1103 have all been produced for the relevant electronic data 1100. Then, in step S934, the data thus produced are stored in recording medium 1117 in association with electronic data 1100. A series of processing is thus finished, and the process returns to the original process in Fig. 23.

Although the case where electronic data 1100 is the XHTML document has been explained above by way of example, it is not restricted to the XHTML document. For example, electronic data 1100 having a hierarchical structure recorded in XML (extensible markup language) or the like may be processed in the similar manner.

According to the third embodiment, tag appearance position data 1102 of a fixed length configured in accordance with the memory capacity is used for processing. This enables efficient reading of only parts of text data 1101 and tag detail data 1103, and thus, data processing can be carried out rapidly and with a memory of small capacity. The present embodiment is particularly advantageous when the memory capacity available is small. Specifically, when tag information data is of a variable length, not separated to tag appearance position data 1102 and tag detail data 1103, the quantity of the tag information data may exceed the memory capacity. In the present embodiment, tag appearance position data 1102 is formed of only the fixed length data. This enables estimation of the maximum capacity available for recording the tag information based on the recording capacity of recording medium 1117 or the like. Accordingly, it is possible to prepare a structure of tag appearance position data 1102 that would not exceed the recording capacity.

Furthermore, according to the present embodiment, electronic data 1100 having a hierarchical structure is processed using corresponding text data 1101, tag appearance position data 1102 and tag detail data 1103 prepared individually from each other. Thus, the processing concerning determination as to whether the data to be processed is a tag portion or a text portion as well as a memory required for that purpose becomes unnecessary. Accordingly, it is possible to accelerate the processing and reduce the memory capacity consumed.

### (Modification of Data)

In the above-described embodiments, in tag appearance position data 1102, the tag name itself has been recorded as the tag name data 1306. Alternatively, an identification number that can uniquely identify the tag name may be recorded. In this case, tag identification information data recording the correspondence between the tag name and the identification number becomes necessary as well.

Similarly, in tag detail data 1103, the attribute name itself has been recorded as the attribute name data AN. Alternatively, an identification number that can uniquely identify the attribute name may be recorded. In this case, attribute identification information data recording the correspondence between the attribute name and the identification number becomes necessary as well.

Furthermore, in the present embodiment, text data 1101, tag appearance position data 1102 and tag detail data 1103 have been produced for the entirety of the electronic data 1100 desired. The target for production of those data, however, is not restricted to the entirety of electronic data 1100. That is, text data 1101, tag appearance position data 1102 and tag detail data 1103 may be produced for any partial data of electronic data 1100 desired by the user.

### (Fourth Embodiment)

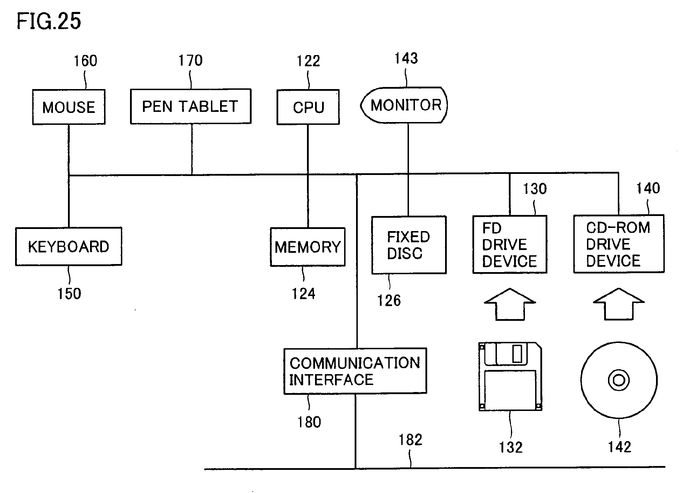

The function for data processing shown in the embodiments described above is implemented by using a computer to execute a program describing the data processing procedure. A configuration example of such a computer is shown in Fig. 25.

Referring to Fig. 25, the computer includes a monitor 143 of CRT (cathode ray tube), liquid crystal or the like, which corresponds to display devices 110, 511 and display portion 1108, a keyboard 150, a mouse 160 and a pen tablet 170, which correspond to instruction input portions 190, 510, 210 and 611 and user instruction processing portion 1109, a CPU (abbreviation of central processing unit) 122 for controlling the computer itself in a centralized manner, which corresponds to control portions 108, 209, 509, 610 and 1110, a memory 124 configured to include a ROM or RAM (abbreviation of random access memory), which may correspond to data storage portions 104, 205, 504 and 605 and recording medium 1117, a fixed disc 126 which may correspond to recording medium 1117, an FD drive device 130 having a FD 132 mounted thereto in a detachable manner and accessing the mounted FD 132, a CD-ROM drive device 140 having a CD-ROM 142 mounted thereto in a detachable manner and accessing the mounted CD-ROM 142, and a communication interface 180 for connecting the communication network 182 of the Internet or the like to the relevant computer for communication. These portions are connected via buses for communication. FD 132 or CD-ROM 142 may correspond to recording medium 1117. Fixed disc 126 or FD 132 or CD-ROM 142 corresponds to recording media 112, 212, 513 and 613. Communication network 182 corresponds to networks 111, 211, 512, 612 and 1115.

The computer may be provided with a magnetic tape devise having a cassette-type magnetic tape mounted thereto in a detachable manner and accessing the mounted magnetic tape.

The program for causing the computer to execute the above-described data processing method is stored in a computer readable recording medium. In the present embodiment, as the recording medium, the memory itself, for example memory 124, required for the computer shown in Fig. 25 to carry out the processing may be a program medium. Alternatively, as an external storage device, a program reading device, such as a not-shown magnetic tape device, CD-ROM drive device 140 or the like, may be provided, where a recording medium like a magnetic tape or CD-ROM 142 may be mounted to realize a readable program medium. In either case, it may be configured to cause CPU 122 to access and execute the stored program. Alternatively, the program may be once read, and the read program may be loaded to a prescribed program storage area in the computer in Fig. 25, e.g., to a prescribed area in the RAM of memory 124, and then read and executed by CPU 122. It is assumed that a program for such loading is prestored in the computer.

Here, the above-described program medium is a recording medium configured to be separable from the computer body. It may be a medium carrying a program in a fixed manner. For example, it may be of a tape type such as a magnetic tape, a cassette tape or the like, of a disc type such as a magnetic disc of FD 132, fixed disc 126 or the like, or an optical disc such as CD-ROM 142 / MO (Magnetic Optical Disc) / MD (Mini Disc) / DVD (Digital Versatile Disc) or the like, of a card type such as an IC card (including a memory card) / optical card or the like, or may be a semiconductor memory such as a mask ROM, EPROM (Erasable and Programmable ROM), EEPROM (Electrically EPROM), flash ROM or the like.

Still further, it may be a medium that carries the program in a flux manner. That is, since the computer shown in Fig. 25 employs the configuration connectable with communication network 182 including the Internet via communication interface 180, it may be a recording medium to which a program is downloaded from communication network 182. When a program is to be downloaded, the program for downloading may be prestored in the computer body, or preinstalled to the computer body from another recording medium.

The content stored in the recording medium is not restricted to a program, but may be data.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A data processing device, comprising:
analysis means (105) for receiving data (300) having a hierarchical structure described in accordance with definition of a document description language and for analyzing said hierarchical structure; and
conversion means (106) for converting said data to data (400) having said hierarchical structure resolved, based on a result of the analysis by said analysis means (105).

2. The data processing device according to claim 1, wherein
said data (300) having the hierarchical structure includes a plurality of tag pairs, said tag pair designating information of an attribute of partial data bounded by the tag pair, and
when said partial data includes another tag pair designating an attribute of the same type as said tag pair bounding the partial data, said conversion means (106) converts attribute information of the other tag pair using attribute information of said tag pair bounding the partial data.

3. The data processing device according to claim 1, wherein said conversion means (106) performs the conversion such that information unnecessary in the data after conversion is excluded.

4. The data processing device according to claim 1, further comprising layout calculation means (207) for calculating a layout for output of said data (400) having the hierarchical structure resolved, obtained by the conversion by said conversion means (106).

5. The data processing device according to claim 1, further comprising dividing means (505) for dividing said data (300) having the hierarchical structure into a plurality of blocks, wherein
said analysis means (105) receives and analyzes the data in units of the blocks divided by said dividing means.

6. A data processing method, comprising:
the analysis step (S1002) of analyzing a hierarchical structure of data (300) having the hierarchical structure described in accordance with definition of a document description language and stored in a recording area prepared in advance; and
the conversion step (S1004) of converting said data (300) stored in said recording area into data (400) having said hierarchical structure resolved, based on a result of the analysis in said analysis step (S1002).

7. A data processing program for causing a computer to execute a data processing method, said data processing method comprising:
the analysis step (S1002) of analyzing a hierarchical structure of data (300) having the hierarchical structure described in accordance with definition of a document description language and stored in a recording area prepared in advance; and
the conversion step (S1004) of converting said data (300) stored in said recording area into data (400) having said hierarchical structure resolved, based on a result of the analysis in said analysis step (S1002).

8. A computer readable recording medium having a data processing program for causing a computer to execute a data processing method recorded therein, said data processing method comprising:
the analysis step (S1002) of analyzing a hierarchical structure of data (300) having the hierarchical structure described in accordance with definition of a document description language and stored in a recording area prepared in advance; and
the conversion step (S1004) of converting said data (300) stored in said recording area into data (400) having said hierarchical structure resolved, based on a result of the analysis in said analysis step (S1002).

9. A data processing device (1118) for processing electronic data (1100) including text data and a plurality of tags appearing in said text data, and structured into hierarchies by using said plurality of tags, comprising:
input means (1104) for inputting text information (1101) having said text data recorded therein, tag detail information (1103) having recorded therein attribute data indicating an attribute of each tag for said plurality of tags, and tag appearance position information (1102) having recorded therein appearance position data indicating an appearance position of each tag in said text data for said plurality of tags;
text reading means for reading said text data corresponding to an arbitrary area of said electronic data (1100) that is to be processed, from said text information (1101) input by said input means (1104);
attribute reading means for specifying said tag appearing in said text data corresponding to said arbitrary area based on said tag appearance position information (1102) input by said input means (1104) and for reading said attribute data of said specified tag from said tag detail information (1103) input by said input means (1104); and
processing means (1106) for processing said text data read by said text reading means based on said attribute data read by said attribute reading means.

10. The data processing device (1118) according to claim 9, wherein said appearance position data is fixed length data.

11. The data processing device (1118) according to claim 9, wherein
said appearance position data includes effective range data indicating an effective range of the tag in said text data, and recording location data indicating a location in said tag detail information (1103) where said attribute data of the tag is recorded, and
said attribute reading means specifies the tag corresponding to said arbitrary area based on said effective range data, and reads said attribute data of the tag from said tag detail information (1103) based on said recording location data of said specified tag.

12. The data processing device (1118) according to claim 11, wherein said effective range data indicates a start location and an end location of a portion of said text data where the attribute of the tag becomes effective.

13. The data processing device (1118) according to claim 11, wherein said effective range data indicates a start location of a portion of said text data where the attribute of the tag becomes effective, and a size of the relevant portion of the data.

14. The data processing device (1118) according to claim 11, wherein said recording location data indicates a recording start location and a recording end location of said attribute data of the tag in said tag detail information (1103).

15. The data processing device (1118) according to claim 11, wherein said recording location data indicates a recording start location of said attribute data of the tag in said tag detail information (1103), and a size of the relevant attribute data.

16. The data processing device (1118) according to claim 9, wherein said processing means (1106) has layout calculation means (1107) for calculating a layout of said text data read by said text reading means based on said attribute data read by said attribute reading means.

17. The data processing device (1118) according to claim 9, further comprising at least one of:
text information producing means (1111) for producing said text information (1101) by searching said electronic data (1100) and extracting and recording said text data;
tag detail information producing means (1113), every time said electronic data (1100) is searched and said tag is retrieved, for producing said tag detail information (1103) by recording said attribute data in association with the relevant tag; and
tag appearance position information producing means (1112), every time said electronic data (1100) is searched and said tag is retrieved, for producing said tag appearance position information (1102) by recording said appearance position data in association with the relevant tag.

18. The data processing device (1118) according to claim 17, wherein
said text information producing means (1111) produces said text information (1101) by searching said arbitrary area of said electronic data (1100) and extracting and recording said text data,
said tag detail information producing means (1113) produces said tag detail information (1103), every time said arbitrary area of said electronic data (1100) is searched and said tag is retrieved, by recording said attribute data in association with the relevant tag, and
the tag position information producing means (1112) produces said tag appearance position information (1102), every time said arbitrary area of said electronic data (1100) is searched and said tag is retrieved, by recording said appearance position data in association with the relevant tag.

19. The data processing device (1118) according to claim 9, further comprising means for determining whether said text information (1101), said tag appearance position information (1102) and said tag detail information (1103) for said electronic data (1100) can be input via said input means (1104).

20. A data processing method for processing electronic data (1100) including text data and a plurality of tags appearing in said text data and structured into hierarchies by using said tags, comprising:
the input step of inputting text information (1101) having said text data recorded therein, tag detail information (1103) having recorded therein attribute data indicating an attribute of each tag for said plurality of tags, and tag appearance position information (1102) having recorded therein appearance position data indicating an appearance position of each tag in said text data for said plurality of tags;
the text reading step (S906) of reading said text data corresponding to an arbitrary area of said electronic data (1100) that is to be processed, from said text information (1101) input in said input step;
the attribute reading step (S907) of specifying said tag appearing in said text data corresponding to said arbitrary area based on said tag appearance position information (1102) input in said input step, and reading said attribute data of said specified tag from said tag detail information (1103) input in said input step; and
the processing step (S909, S910) of processing said text data read in said text reading step (S906) based on said attribute data read in said attribute reading step (S906).

21. A data processing program for causing a computer to execute a data processing method for processing electronic data (1100) including text data and a plurality of tags appearing in said text data and structured into hierarchies by using said tags,
said data processing method comprising:
the input step of inputting text information (1101) having said text data recorded therein, tag detail information (1103) having recorded therein attribute data indicating an attribute of each tag for said plurality of tags, and tag appearance position information (1102) having recorded therein appearance position data indicating an appearance position of each tag in said text data for said plurality of tags;
the text reading step (S906) of reading said text data corresponding to an arbitrary area of said electronic data (1100) that is to be processed, from said text information (1101) input in said input step;
the attribute reading step (S907) of specifying said tag appearing in said text data corresponding to said arbitrary area based on said tag appearance position information (1102) input in said input step, and reading said attribute data of said specified tag from said tag detail information (1103) input in said input step; and
the processing step (S909, S910) of processing said text data read in said text reading step (S906) based on said attribute data read in said attribute reading step (S906).

22. A computer readable recording medium having a data processing program recorded therein for causing a computer to execute a data processing method for processing electronic data (1100) including text data and a plurality of tags appearing in said text data and structured into hierarchies by using said tags,
said data processing method comprising:
the input step of inputting text information (1101) having said text data recorded therein, tag detail information (1103) having recorded therein attribute data indicating an attribute of each tag for said plurality of tags, and tag appearance position information (1102) having recorded therein appearance position data indicating an appearance position of each tag in said text data for said plurality of tags;
the text reading step (S906) of reading said text data corresponding to an arbitrary area of said electronic data (1100) that is to be processed, from said text information (1101) input in said input step;
the attribute reading step (S907) of specifying said tag appearing in said text data corresponding to said arbitrary area based on said tag appearance position information (1102) input in said input step, and reading said attribute data of said specified tag from said tag detail information (1103) input in said input step; and
the processing step (S909, S910) of processing said text data read in said text reading step (S906) based on said attribute data read in said attribute reading step (S906).
